# EUROPEAN PATENT SPECIFICATION

(11) **EP 2 772 863 B1**
(45) Date of publication and mention of the grant of the patent: **27.07.2016**
(21) Application number: 11874819.3
(22) Date of filing: 28.10.2011
(51) Int. Cl.: G06F 12/00, G06F 11/14

(54) **INFORMATION PROCESSING SYSTEM AND FILE RESTORATION METHOD USING SAME**
INFORMATIONSVERARBEITUNGSSYSTEM UND DATEIWIEDERHERSTELLUNGSVERFAHREN DAMIT
SYSTÈME DE TRAITEMENT D'INFORMATIONS ET PROCÉDÉ DE RESTAURATION DE FICHIER L'UTILISANT

(43) Date of publication of application: 03.09.2014
(73) Proprietor: Hitachi, Ltd., Tokyo 100-8280 (JP)
(72) Inventor: MATSUMOTO, Shinya, Tokyo 100-8280 (JP); NEMOTO, Jun, Tokyo 100-8280 (JP); IWASAKI, Masaki, Tokyo 100-8280 (JP); SAIKA, Nobuyuki, Tokyo 100-8280 (JP); KANIE, Homare, Tokyo 100-8280 (JP); ARAI, Hitoshi, Tokyo 100-8280 (JP)
(74) Representative: MERH-IP Matias Erny Reichl Hoffmann Patentanwälte PartG mbB
(86) International application number: PCT/JP2011/006072
(87) International publication number: WO 2013/061388

(56) References cited:
- JP-A- 2006 039 942
- JP-A- 2006 164 211
- JP-A- 2008 040 699
- JP-A- 2009 289 252
- JP-A- 2011 039 805
- JP-A- 2011 076 294
- US-A1- 2009 300 079
- US-A1- 2010 082 553

## Description

### [Technical Field]

The present invention relates to an information processing system comprising a file restoration function.

### [Background Art]

As conventional examples of a file restoration system in an information processing system, PTL1 and PTL2 hereinbelow are known. Of these two patent literature examples, PTL1 discloses a hierarchical storage apparatus restoration method which reduces the time required to restore the hierarchical storage apparatus and which runs on an operating system and permits high speed restoration of a hierarchical storage apparatus, the hierarchical storage apparatus comprising a first storage device which comprises inodes including file attribute information and in which a file system is constructed for uniquely identifying the files using inode numbers, and a second storage device which stores data containing file system backup data, wherein, when the file system is restored to the first storage device from the backup data in the second storage device, the inode numbers contained in the backup data are used to designate the inode numbers of the restoration target file and the designated inode numbers are assigned to the restoration target file of the file system.

PTL2 discloses an HSM control method for performing control of an HSM which comprises a primary storage and a secondary storage and for performing efficient backup generation management of namespaces in the HSM, wherein generation information which is information including backup generation numbers for each of the HSM backups is created, and wherein, as a namespace information history, namespace information which is information relating to namespaces for each of the files in the HSM is managed together with a valid generation number range which indicates the range of generation numbers for which information relating to the namespaces is valid using the generation numbers created by generation information creation step.

Further reference is made to US Patent Application Publication Nos. 2010/0082553, which discloses an arrangement for backing up and restoring selected versioned objects from a monolithic database backup, and 2009/0300079, which discloses an arrangement for integrated remote replication in hierarchical storage systems.

### [Citation List]

### [Patent Literature]

[PTL1]
   Japanese Patent Application Publication No. 2005-316708
[PTL 2]
   Japanese Patent Application Publication No. 2008-040699

### [Summary of Invention]

### [Technical Problem]

Further, in an information processing system in which the backups of an information processing device data provided in a branch or plant of a business are managed in a backup device installed in a data center or the like, if a file is deleted by mistake by a user who uses the information processing device to access the file, the deleted file is desirably restored by means of a user operation.

In a method which is disclosed in PTL1, the services of the information processing device are restarted after all the backup data on the backup device side has been restored. Hence, if the backup data size is large, for example, it sometimes takes a long time to complete restoration of a file acquired by the user and an excessive amount of file system capacity of the information processing device may be consumed, which affects user tasks and the like.

Meanwhile, in the method disclosed in PTL2, a list for managing generations of all the files in the information processing device is retrieved and a restoration target is specified. Hence, for example, if a multiplicity of files exist in the file system or there is a large number of file modifications, the size of this list may grow, and it sometimes takes a long time to complete restoration of a file acquired by the user and an excessive amount of file system capacity of the information processing device may be consumed, which affects user tasks and the like.

The present invention was devised in light of this background, and the main object of the invention is to provide a file restoration method for an information processing system as well as an information processing system which enable files to be restored rapidly with minimal storage capacity consumption when a file access request is made by the user.

### [Solution to Problem]

In order to achieve the foregoing object, the present invention provides an information processing system, comprising a first server apparatus which comprises a first file system and which receives I/O requests from a client apparatus; a first storage apparatus which comprises storage of the first server apparatus; a second server apparatus which comprises a second file system and is communicably connected to the first server apparatus; and a second storage apparatus which comprises storage of the second server apparatus, the first server apparatus transmitting data of a file which is the target of the I/O request and which is stored in the first storage apparatus to the second server apparatus, and the second server apparatus storing the data which is sent from the first server apparatus in the second storage apparatus while holding a directory image of the first file system in the second file system, wherein the second server apparatus acquires a first directory image of a predetermined level in the directory image that is configured in the file system of the first server apparatus from the directory image in the second storage apparatus and transmits the first directory image to the first server apparatus, wherein, upon receiving an I/O request for a file which is to be restored from the client apparatus after the first directory image sent from the second server apparatus is restored to the first storage apparatus, the first server apparatus determines whether or not a second directory image which is required to process the received I/O request exists in the first directory image of the first storage apparatus and, if the second directory image does not exist, issues a request to the second server apparatus to request the second directory image, wherein, when the request is sent from the first server apparatus, the second server apparatus reads the second directory image from the second storage apparatus and transmits the second directory image to the first server apparatus, and the first server apparatus restores the second directory image to the first storage apparatus, wherein the first server apparatus restores an object directory image, which includes the first directory image, the second directory image, and the file, to the first storage, and wherein, whenever a file system object is created or updated, the second file system of the second server apparatus manages the created or updated file system object using a different version ID, and the first server apparatus utilizes the version ID in the process of restoring the object directory.

### [Advantageous Effects of Invention]

The present invention enables files to be rapidly restored with minimal storage consumption at the time of a file access request by a user.

### [Brief Description of Drawings]

[Fig. 1]

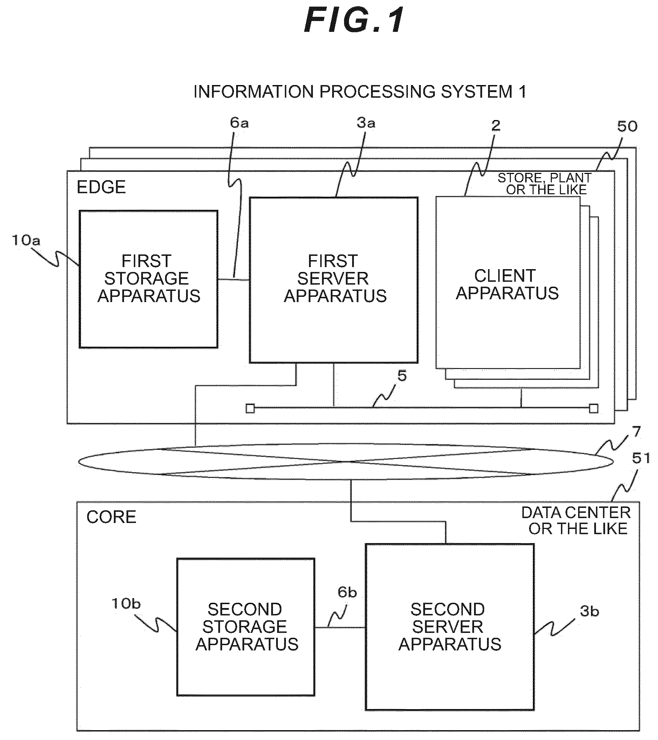

   Fig. 1 shows a schematic configuration of an information processing system 1 according to a first embodiment.
[Fig. 2]

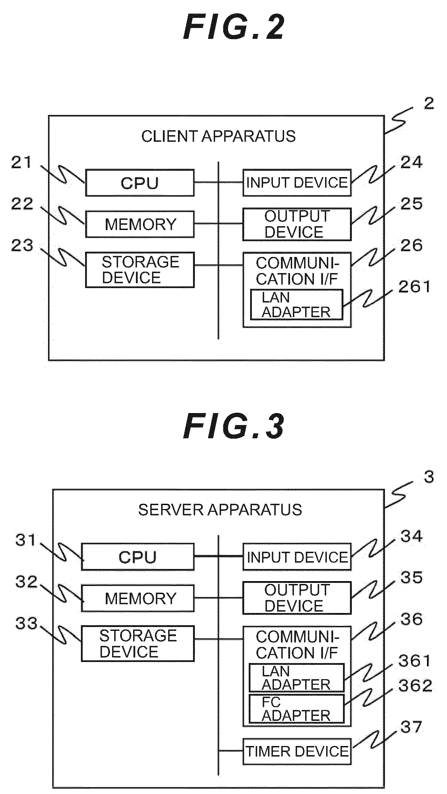

   Fig. 2 is an example of hardware of a client apparatus 2 according to the first embodiment.
[Fig. 3]
   Fig. 3 is an example of hardware of an information processing device which can be utilized as a first server apparatus 3a or a second server apparatus 3b according to the first embodiment.
[Fig. 4]

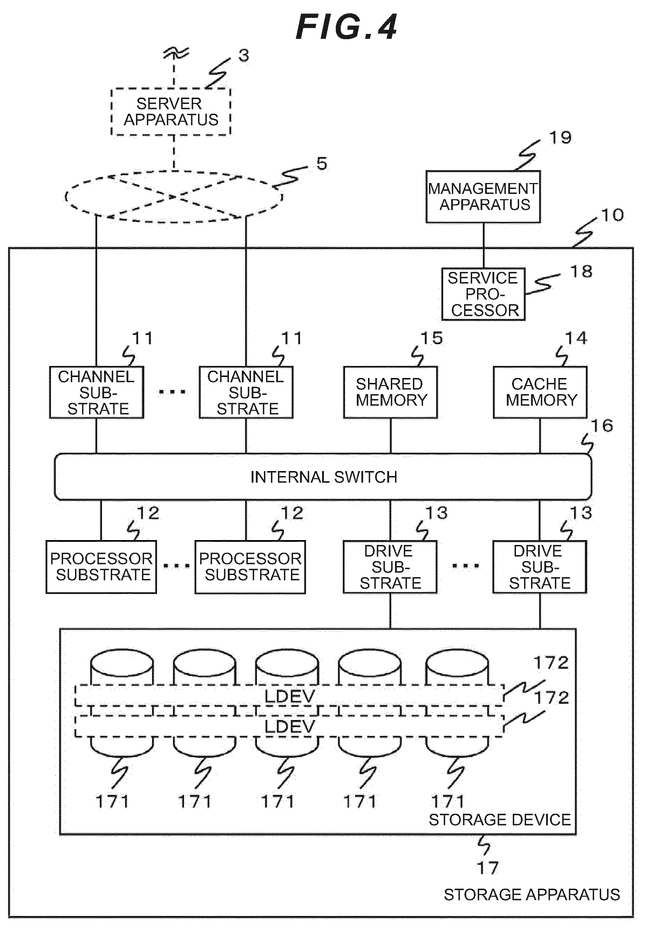

   Fig. 4 is an example of hardware of a first storage apparatus 10a or a second storage apparatus 10b according to the first embodiment.
[Fig. 5]

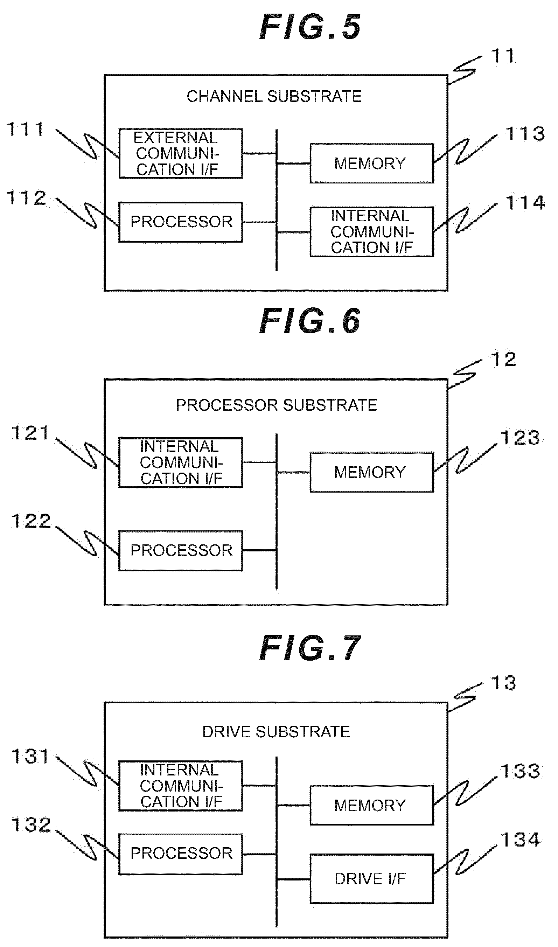

   Fig. 5 is an example of hardware of a channel substrate 11 according to the first embodiment.
[Fig. 6]
   Fig. 6 is an example of hardware of a processor substrate 12 according to the first embodiment.
[Fig. 7]
   Fig. 7 is an example of hardware of a drive substrate 13 according to the first embodiment.
[Fig. 8]

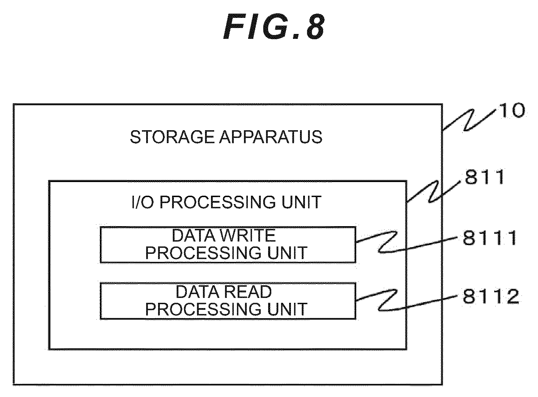

   Fig. 8 shows the basic functions of the storage apparatuses 10 according to the first embodiment.
[Fig. 9]

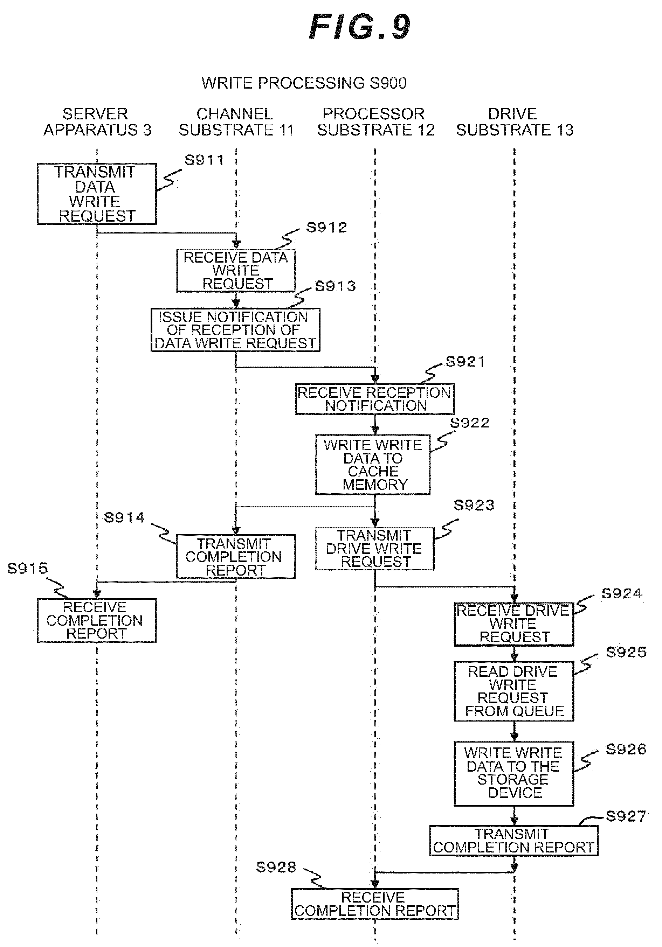

   Fig. 9 is a flowchart illustrating write processing S900 according to the first embodiment.
[Fig. 10]

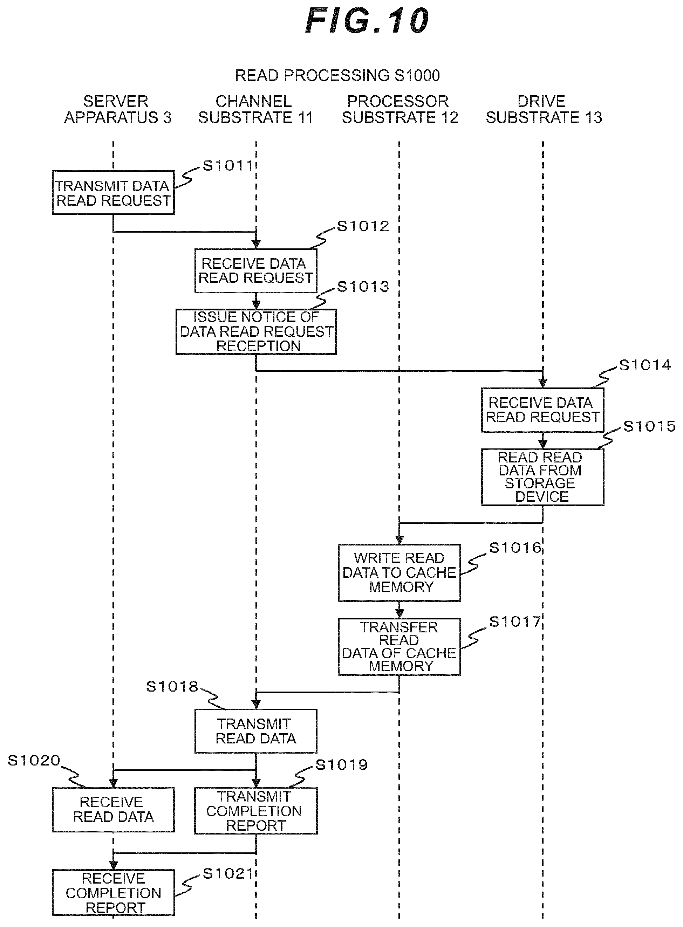

   Fig. 10 is a flowchart illustrating read processing S1000 according to the first embodiment.
[Fig. 11]

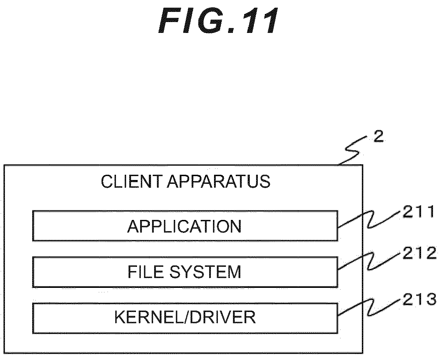

   Fig. 11 shows the main functions of the client apparatus 2 according to the first embodiment.
[Fig. 12]

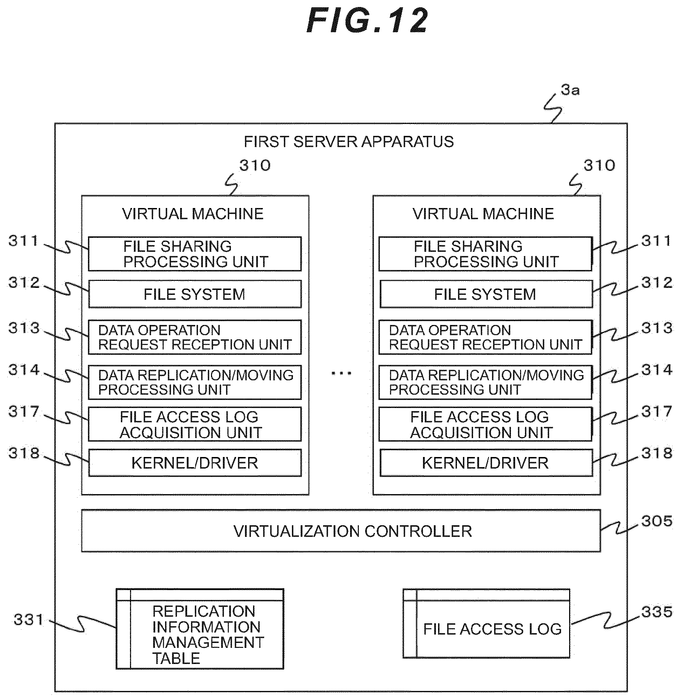

   Fig. 12 shows main functions of the first server apparatus 3a and main information (data) managed by the first server apparatus 3a according to the first embodiment.
[Fig. 13]
   Fig. 13 is an example of a replication information management table 331 according to the first embodiment.
[Fig. 14] Fig. 14 is an example of a file access log 335 according to the first embodiment.
[Fig. 15]

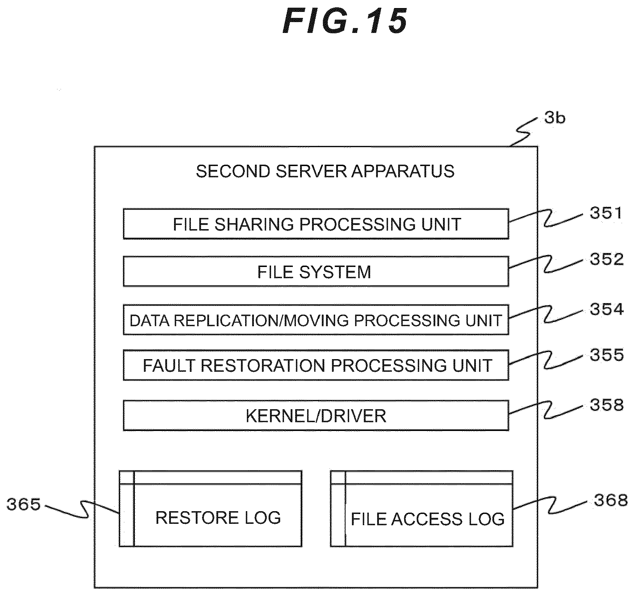

   Fig. 15 shows main functions of the second server apparatus 3b and main information (data) managed by the second server apparatus 3b according to the first embodiment.
[Fig. 16]

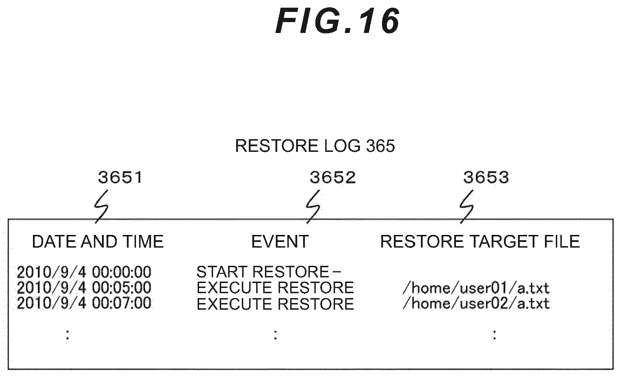

   Fig. 16 is an example of a restore log 365 according to the first embodiment.

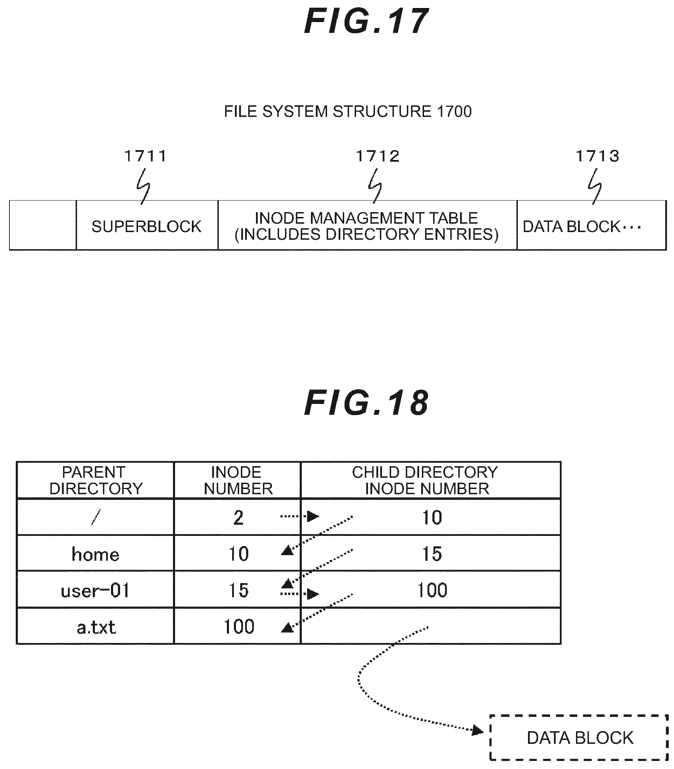

[Fig. 17] Fig. 17 illustrates inodes according to the first embodiment.
[Fig. 18]
   Fig. 18 illustrates the inode concept according to the first embodiment.
[Fig. 19]

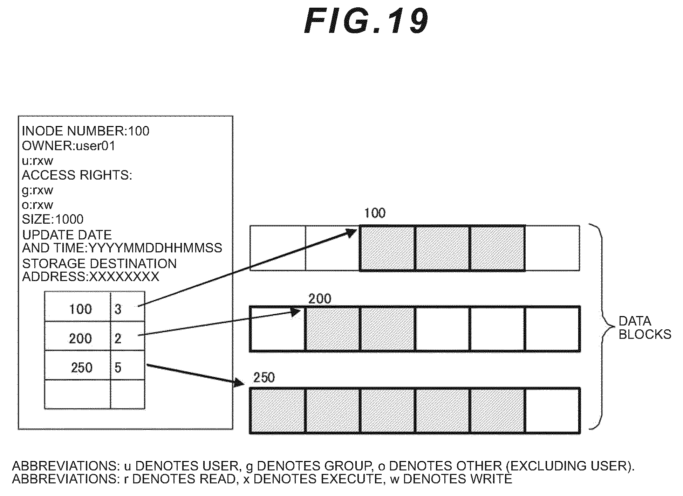

   Fig. 19 illustrates the inode concept according to the first embodiment.
[Fig. 20]

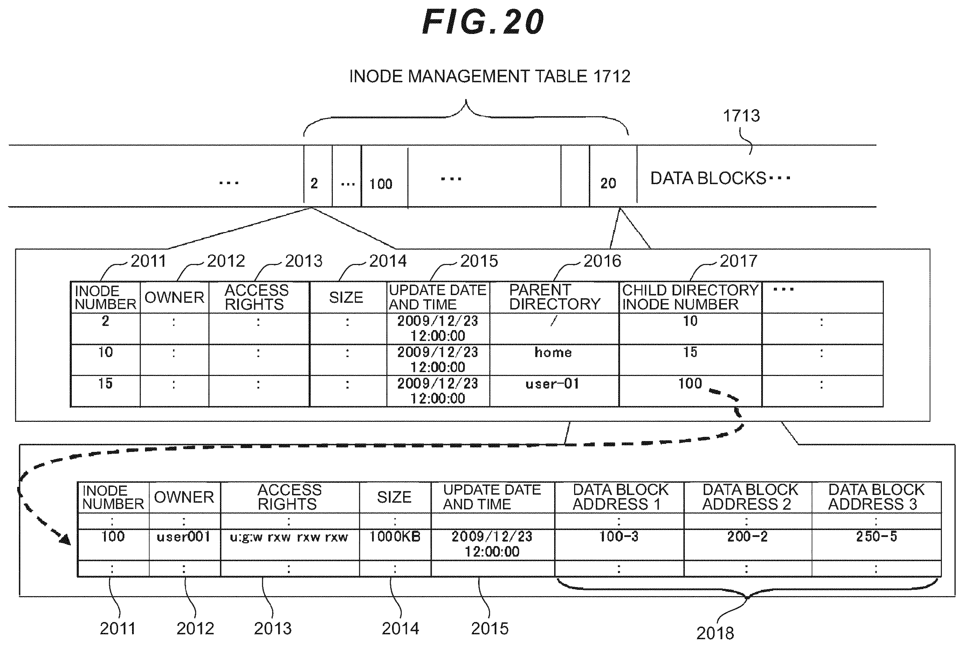

   Fig. 20 is an example of a typical inode management table 1712 according to the first embodiment.
[Fig. 21]

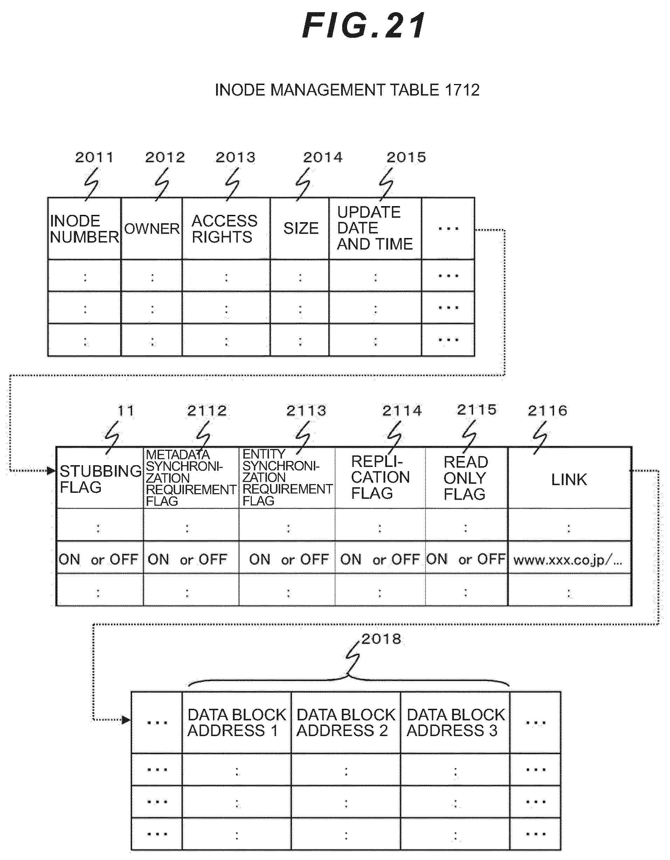

   Fig. 21 is an example of the inode management table 1712 according to this embodiment according to the first embodiment.
[Fig. 22]

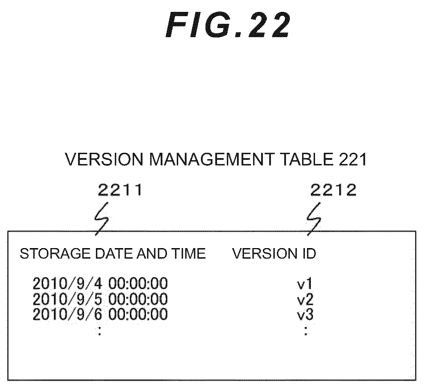

   Fig. 22 is an example of a package management table 221 according to the first embodiment.
[Fig. 23]

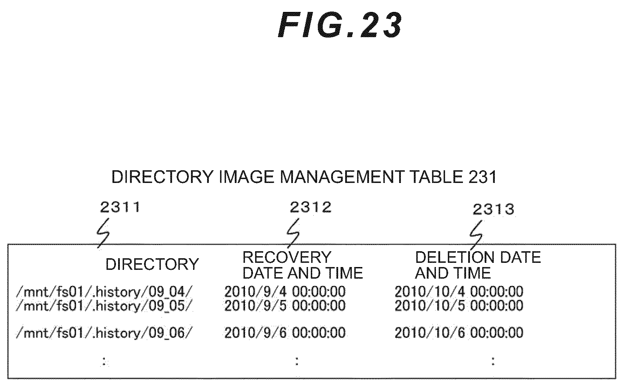

   Fig. 23 is an example of a directory image management table 231 according to the first embodiment.
[Fig. 24]

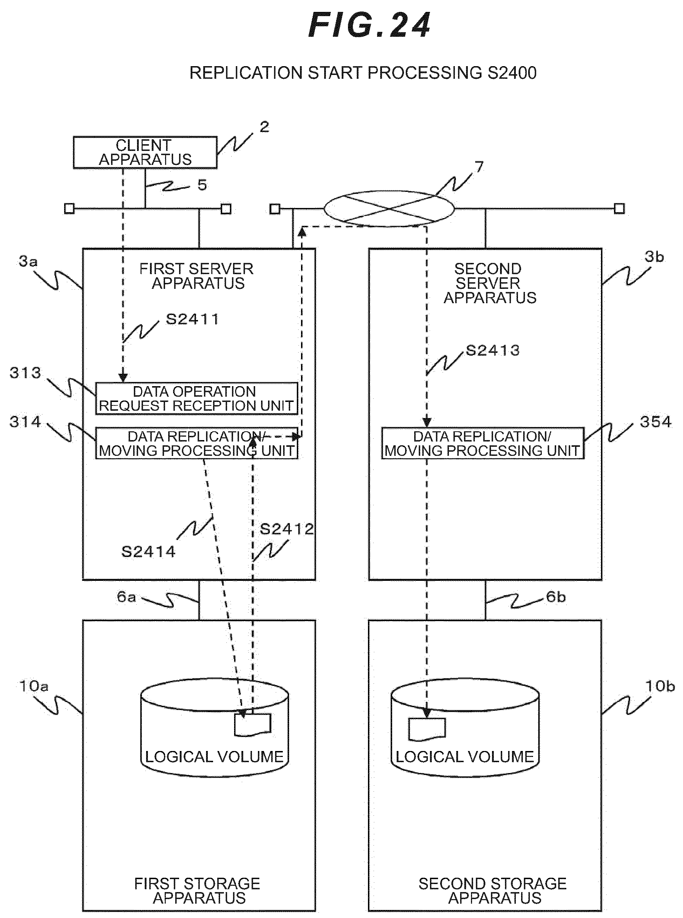

   Fig. 24 illustrates replication start processing S2400 according to the first embodiment.
[Fig. 25]

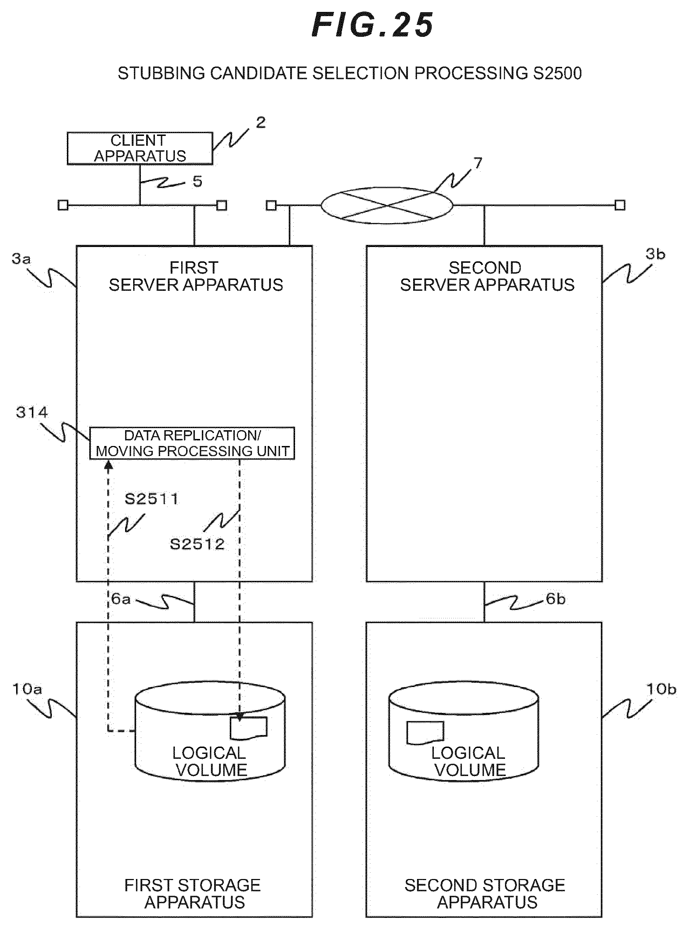

   Fig. 25 illustrates stubbing candidate selection processing S2500 according to the first embodiment.
[Fig. 26]

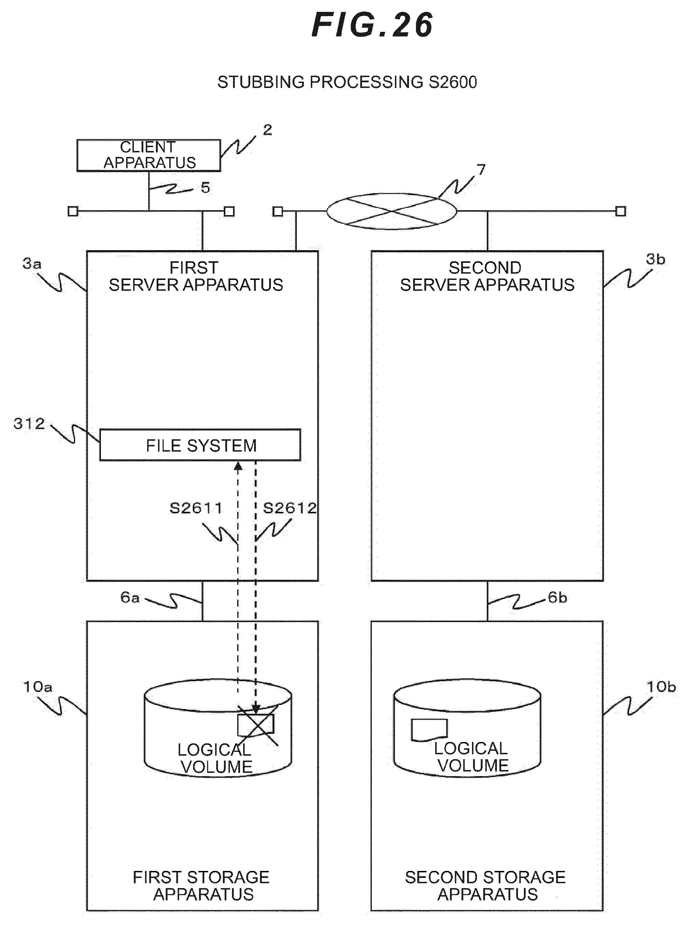

   Fig. 26 illustrates stubbing processing S2600 according to the first embodiment.
[Fig. 27]

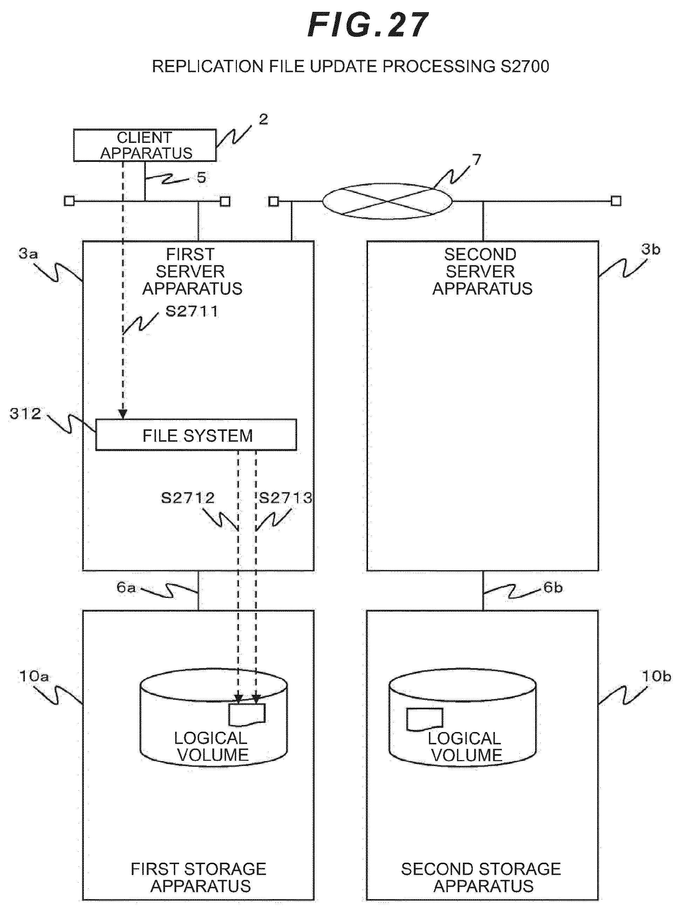

   Fig. 27 illustrates replication file update processing S2700 according to the first embodiment.
[Fig. 28]

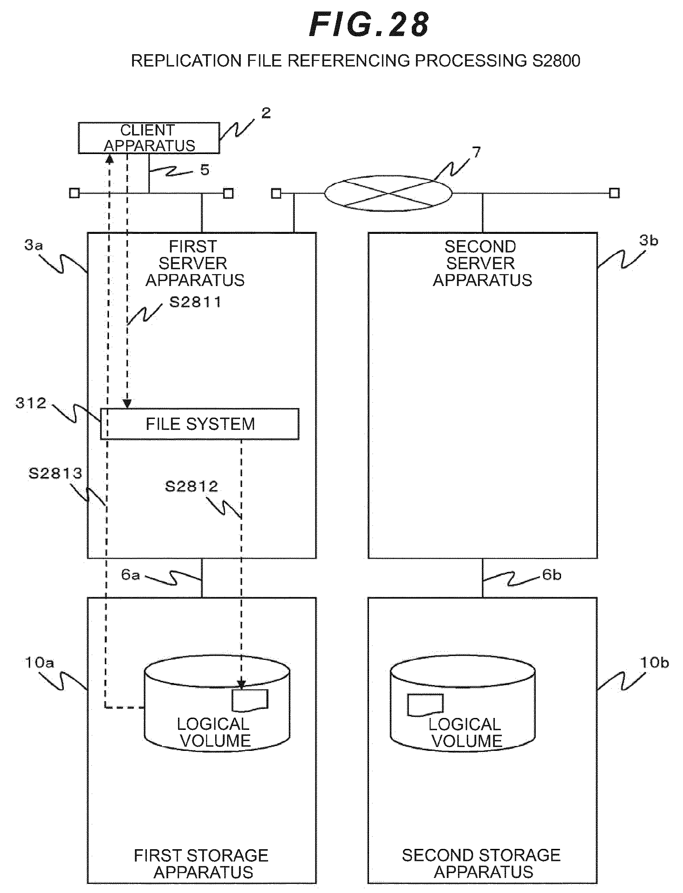

   Fig. 28 illustrates replication file referencing processing S2800 according to the first embodiment.
[Fig. 29]

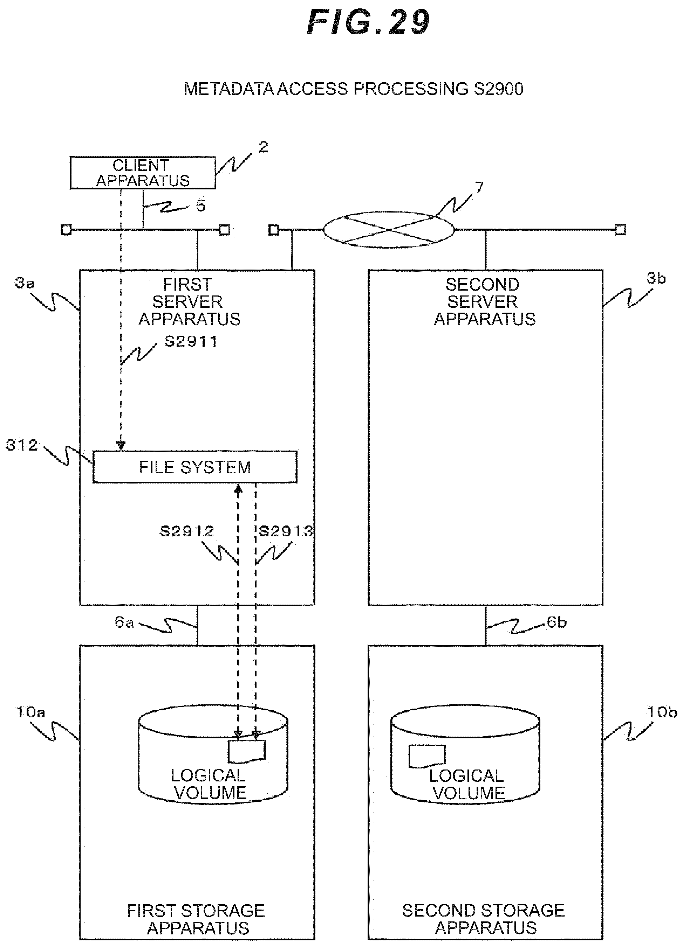

   Fig. 29 illustrates metadata access processing S2900 according to the first embodiment.
[Fig. 30]

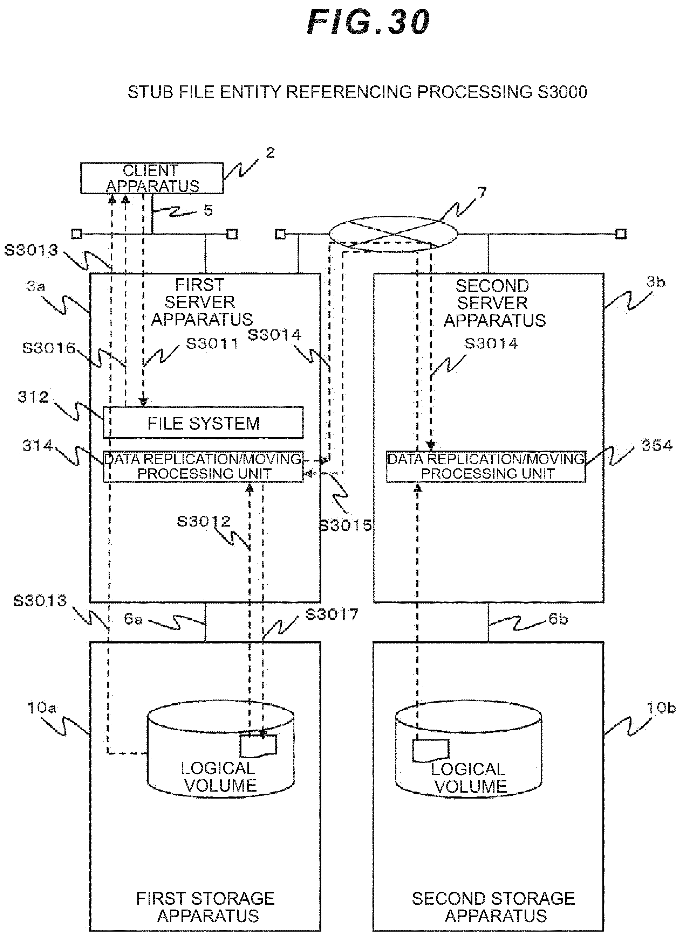

   Fig. 30 illustrates stub file entity referencing processing S3000 according to the first embodiment.
[Fig. 31]

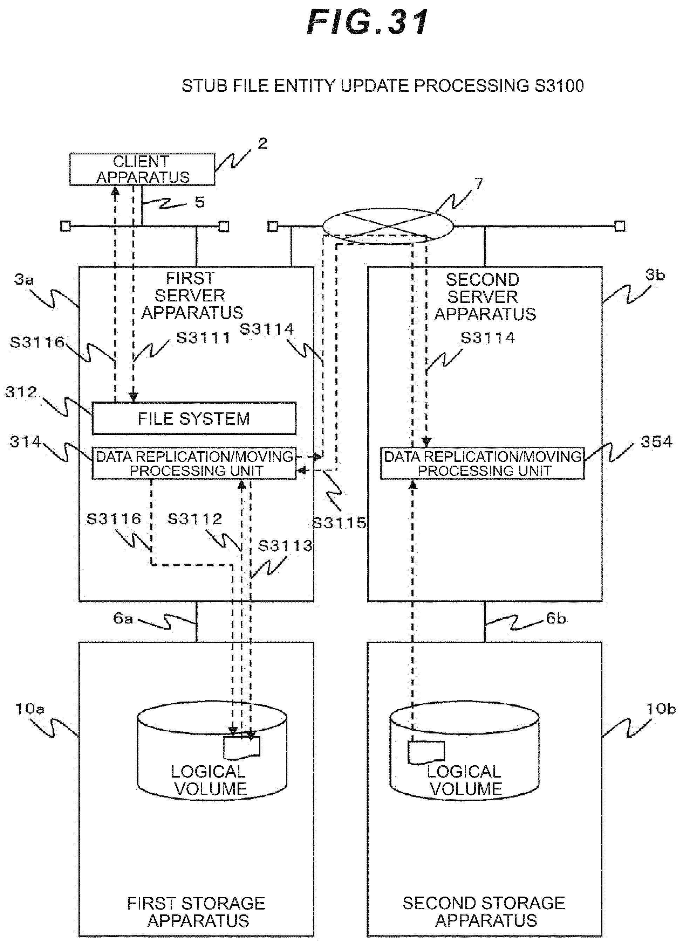

   Fig. 31 illustrates stub file entity update processing S3100 according to the first embodiment.
[Fig. 32]

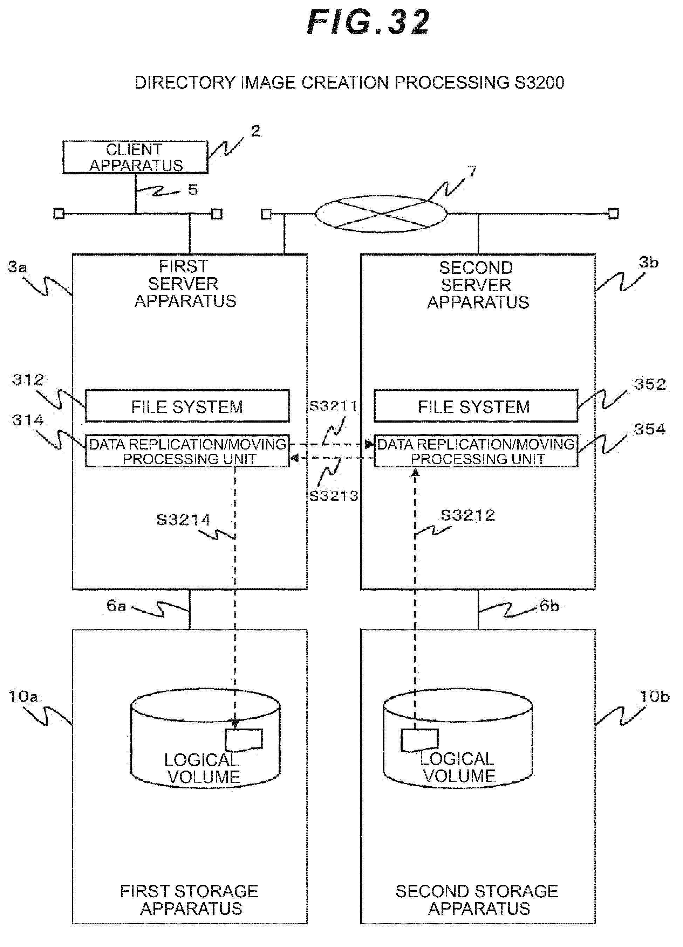

   Fig. 32 illustrates directory image creation processing S3200 according to the first embodiment.
[Fig. 33]

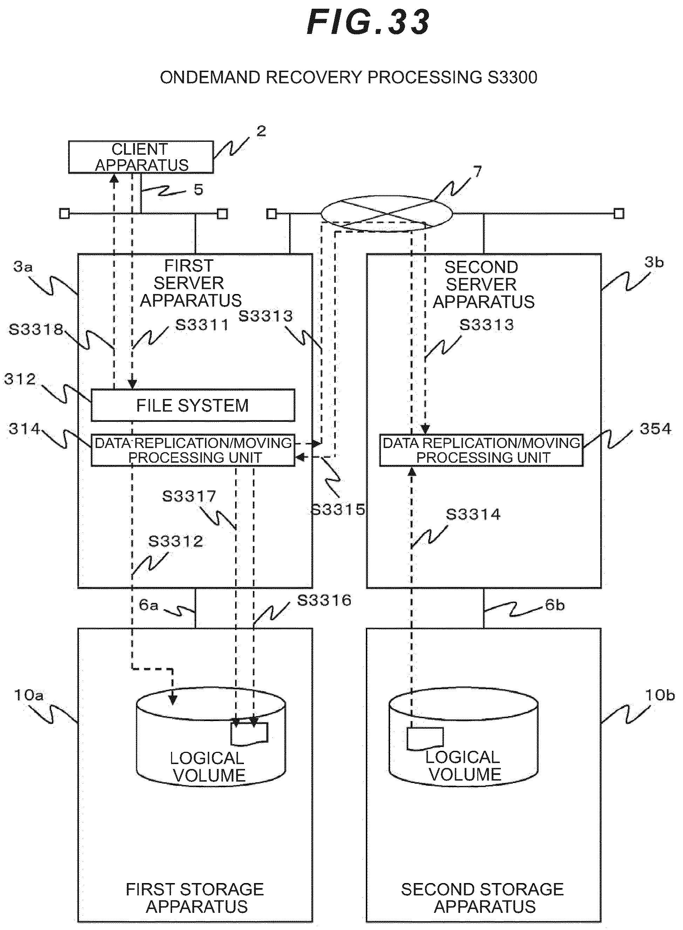

   Fig. 33 illustrates on-demand restoration processing S3300 according to the first embodiment.
[Fig. 34]

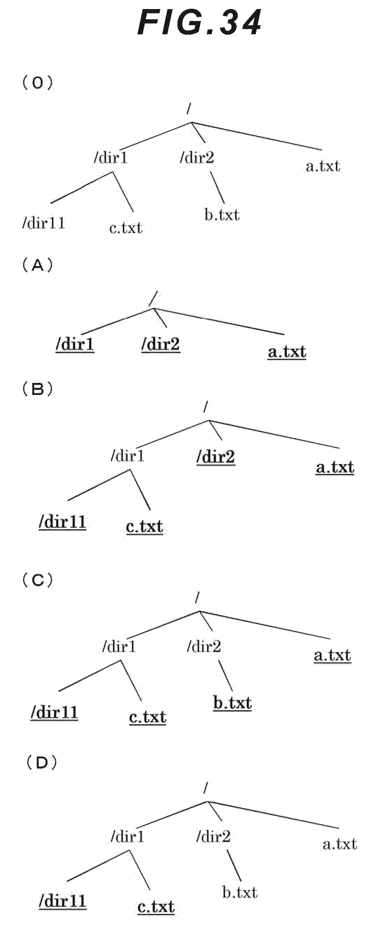

   Fig. 34 illustrates an aspect in which a directory image is restored to the first storage apparatus 10a, according to the first embodiment.
[Fig. 35]

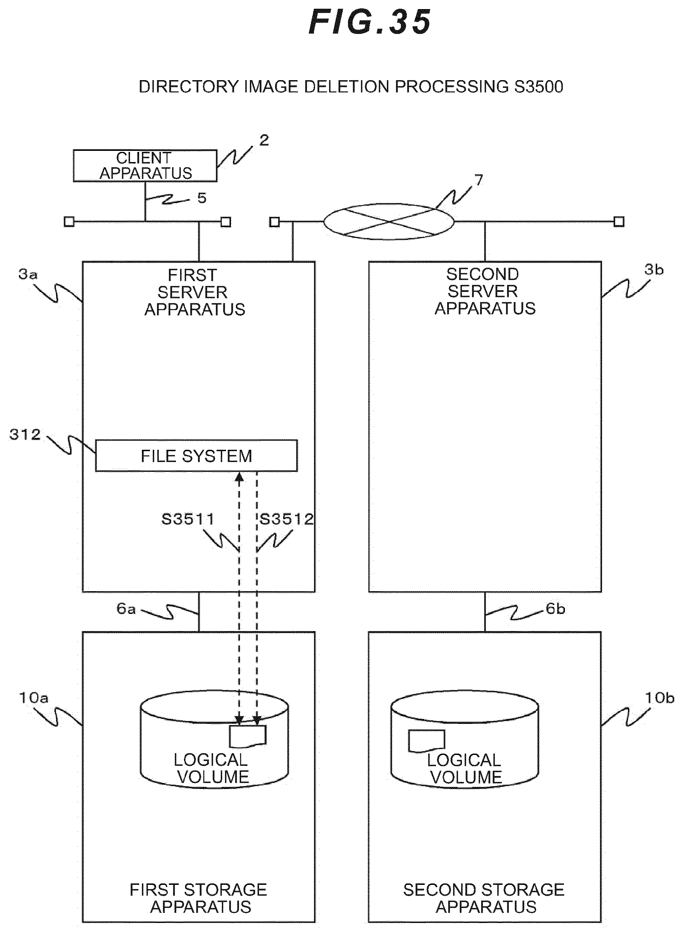

   Fig. 35 illustrates directory image deletion processing S3500 according to the first embodiment.
[Fig. 36]

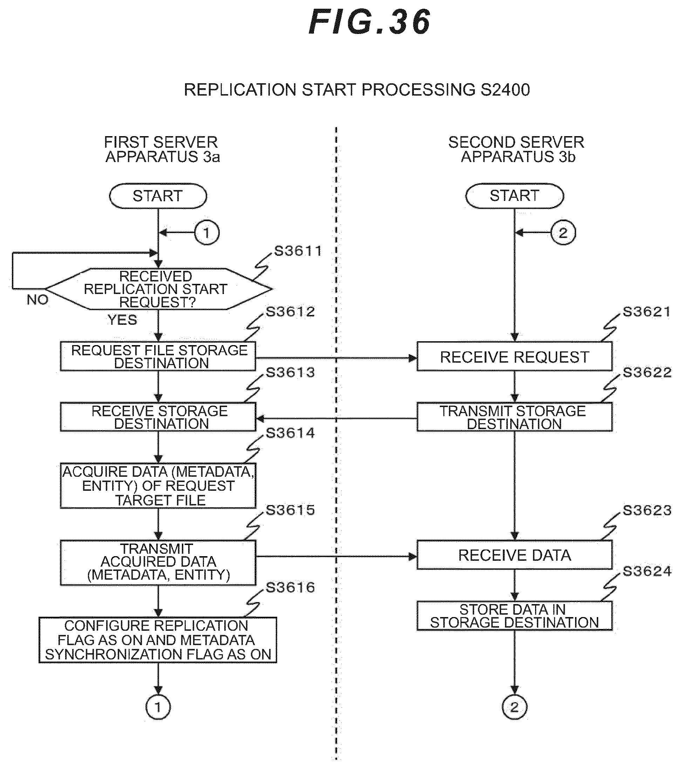

   Fig. 36 is a flowchart illustrating the details of replication start processing S2400 according to the first embodiment.
[Fig. 37]

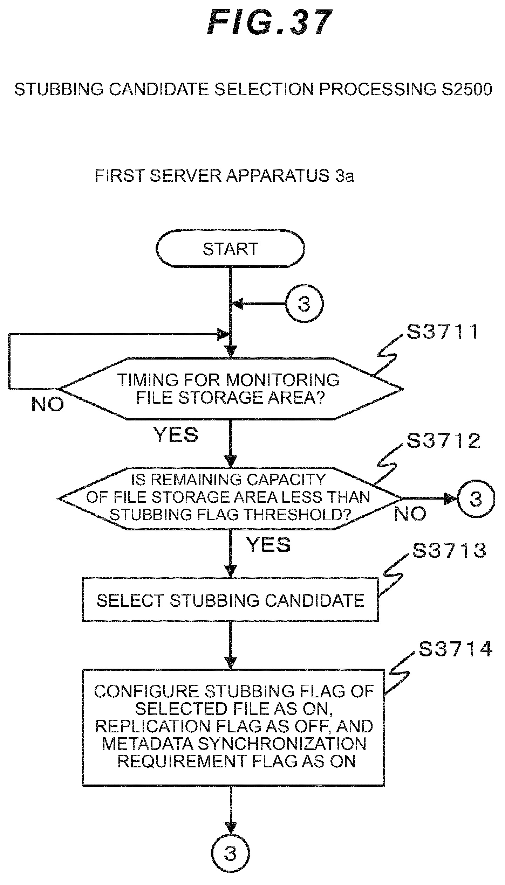

   Fig. 37 is a flowchart illustrating the details of stubbing candidate selection processing S2500 according to the first embodiment.
[Fig. 38]

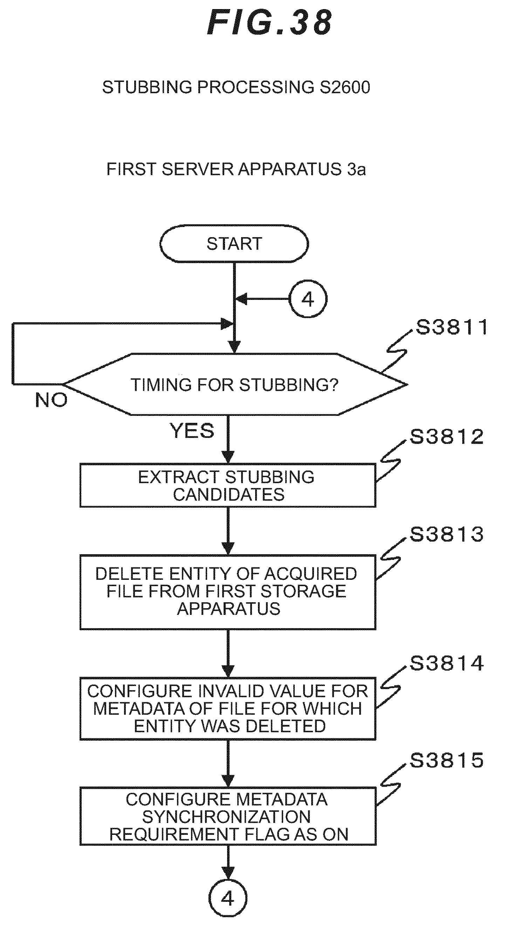

   Fig. 38 is a flowchart illustrating the details of stubbing processing S2600 according to the first embodiment.
[Fig. 39]

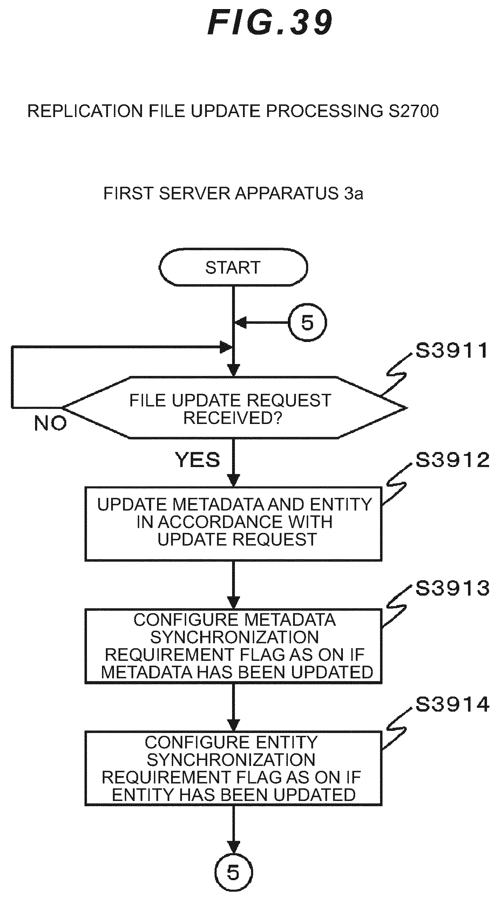

   Fig. 39 is a flowchart illustrating the details of replication file update processing S2700 according to the first embodiment.
[Fig. 40]

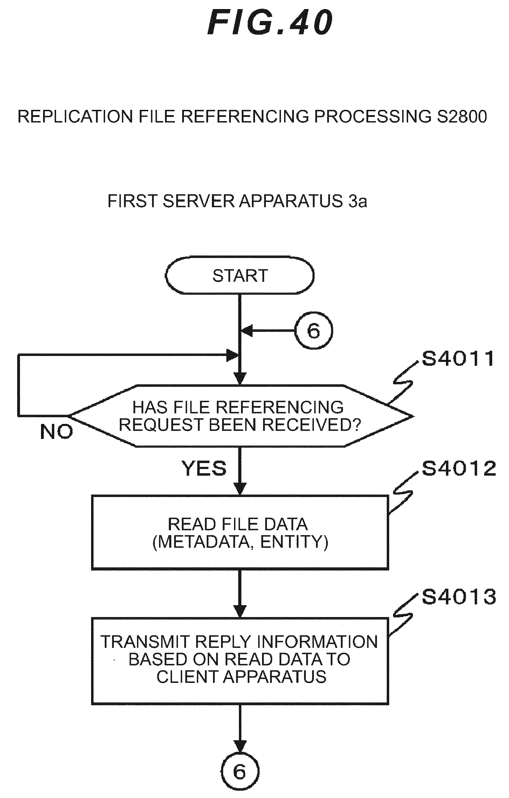

   Fig. 40 is a flowchart illustrating the details of replication file referencing processing S2800 according to the first embodiment.
[Fig. 41]

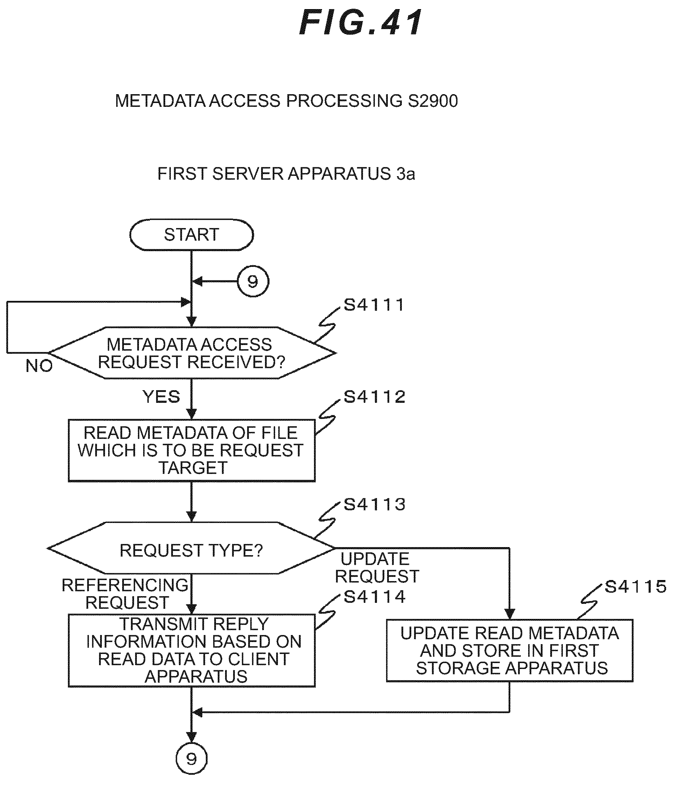

   Fig. 41 is a flowchart illustrating the details of metadata access processing S2900 according to the first embodiment.
[Fig. 42]

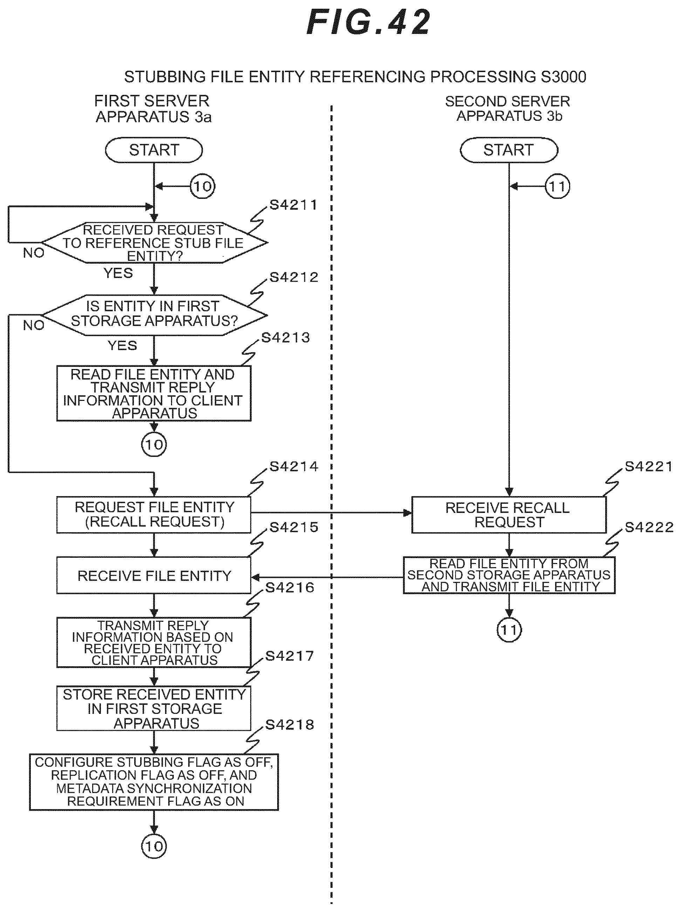

   Fig. 42 is a flowchart illustrating the details of stub file entity referencing processing S3000 according to the first embodiment.
[Fig. 43]

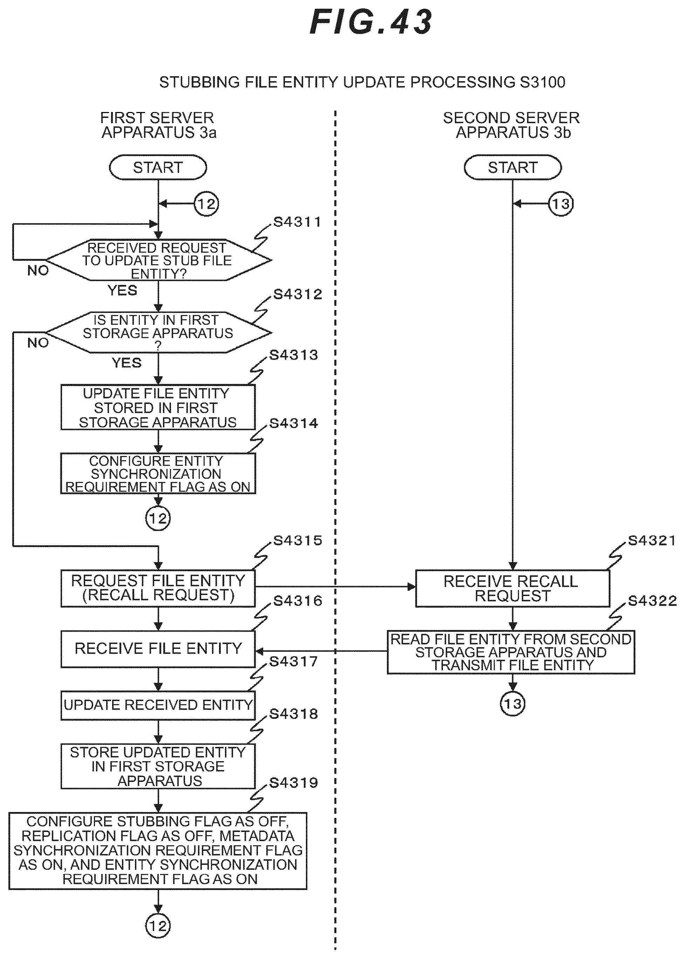

   Fig. 43 is a flowchart illustrating the details of stub file entity update processing S3100 according to the first embodiment.
[Fig. 44]

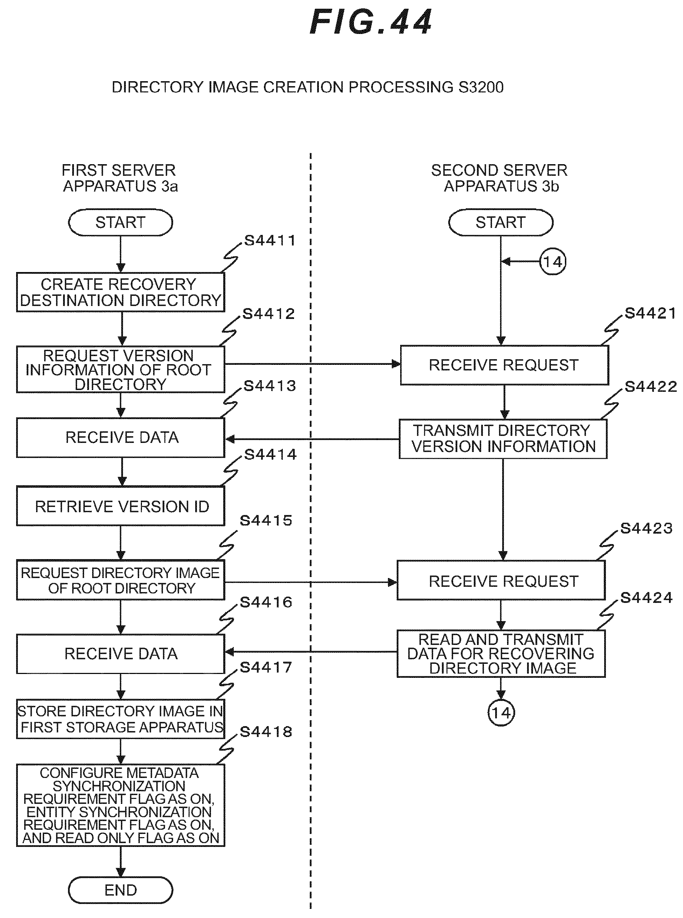

   Fig. 44 is a flowchart illustrating the details of directory image creation processing S3200 according to the first embodiment.
[Fig. 45]

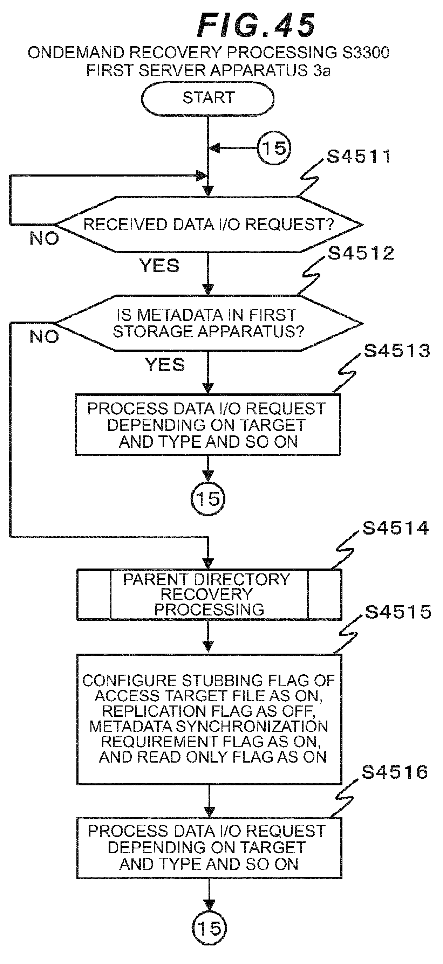

   Fig. 45 is a flowchart illustrating the details of on-demand restoration processing S3300 according to the first embodiment.
[Fig. 46]

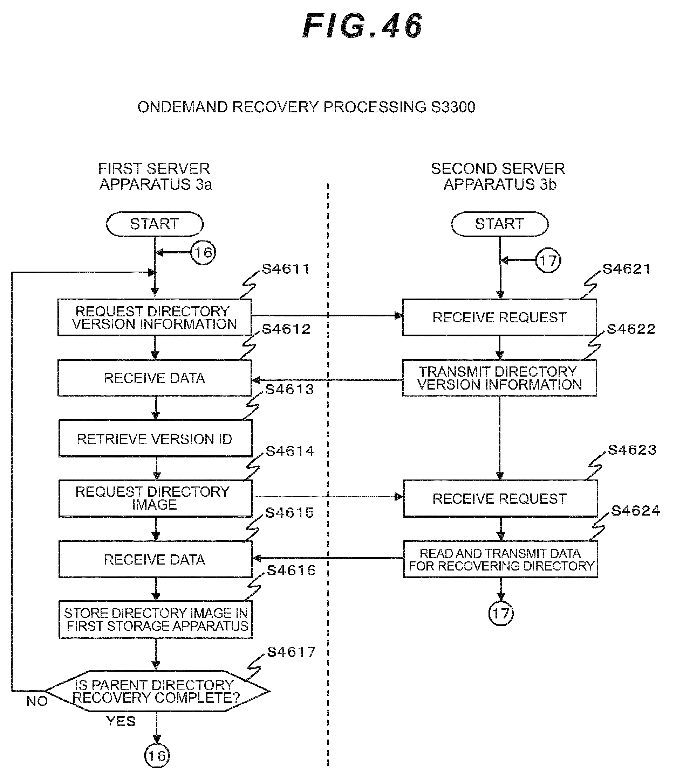

   Fig. 46 is a flowchart illustrating the details of on-demand restoration processing S3300 according to the first embodiment.
[Fig. 47]

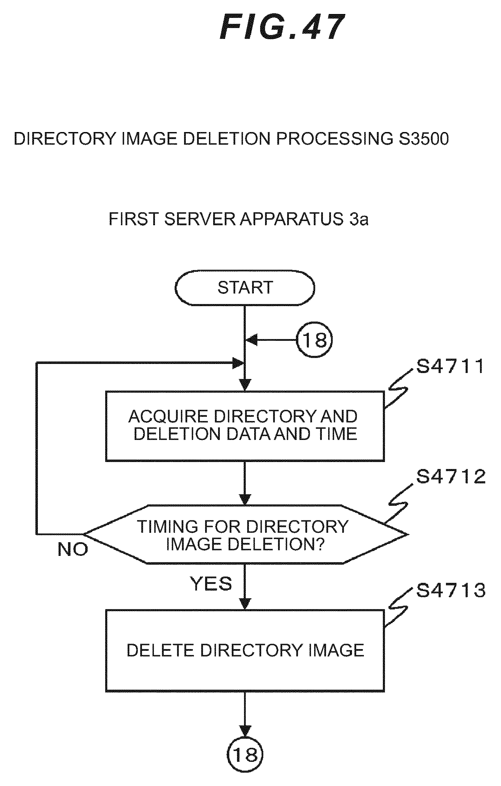

   Fig. 47 is a flowchart illustrating the details of directory image deletion processing S3500 according to the first embodiment.
[Fig. 48]

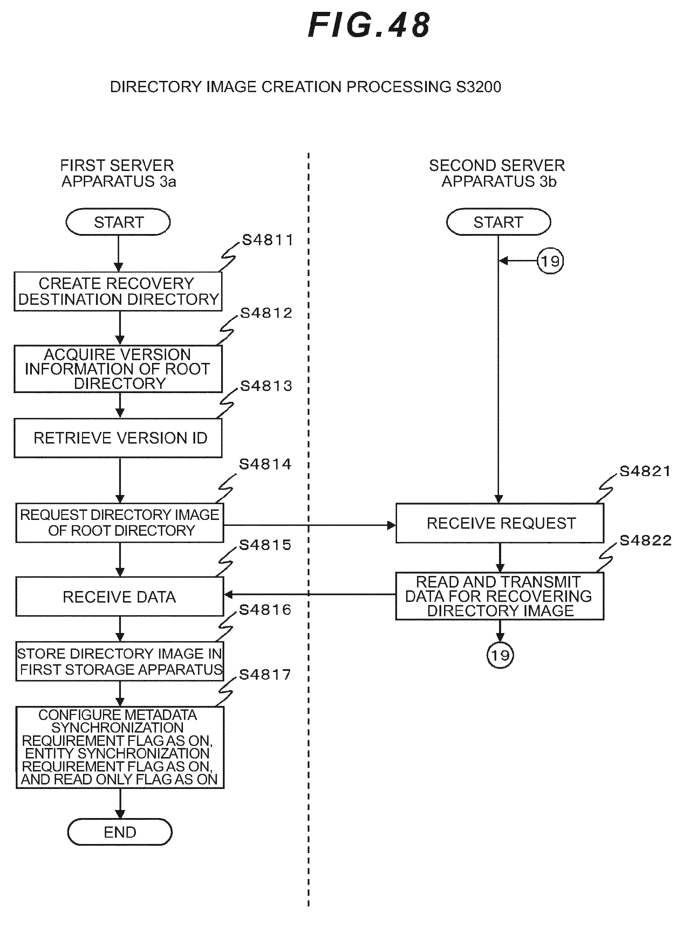

   Fig. 48 is a flowchart illustrating the details of directory image creation processing S3200 according to a second embodiment.
[Fig. 49]

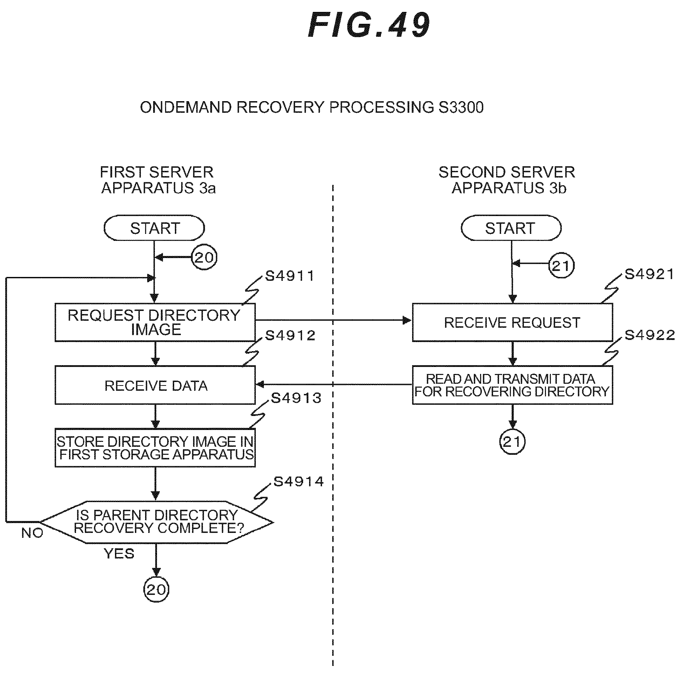

   Fig. 49 is a flowchart illustrating the details of on-demand restoration processing S3300 according to the second embodiment.

### [Description of Embodiments]

### (First Embodiment)

A first embodiment of the invention will be explained hereinbelow with reference to the drawings.

Fig. 1 shows the schematic configuration of an information processing system 1 illustrated as an embodiment. As shown in Fig. 1, the information processing system 1 serving as an example of the embodiment comprises hardware which is provided on site where the user actually performs the task (hereinafter called an edge 50), as in the case of a support point or plant of a company such as a trading company or appliance manufacturer, and hardware which is provided on site (hereinafter called a core 51) providing management or cloud services for an information processing system (application server/storage system), as in the case of a data center.

As shown in Fig. 1, the edge 50 is provided with a first server apparatus 3a, a first storage apparatus 10a, and a client apparatus 2. The core 51 is provided with a second server apparatus 3b and a second storage apparatus 10b.

The first server apparatus 3a provided in the edge is, for example, a file storage apparatus which comprises a file system that provides a data management function in which files serve as units to the client apparatus 2 provided in the edge. Furthermore, the second server apparatus 3b provided in the core is an archive apparatus which functions as a data archive destination for the first storage apparatus 10a provided in the edge, for example.

As shown in Fig. 1, the client apparatus 2 and first server apparatus 3a are communicably connected via a communication network. Further, the first server apparatus 3a and first storage apparatus 10a are communicably connected via a first storage network 6a. Furthermore, the second server apparatus 3b and second storage apparatus 10b are communicably connected via the second storage network 6b. The first server apparatus 3a and second server apparatus 3b are communicably connected via a communication network 7.

The communication network 5 and communication network 7 are, for example, a LAN (Local Area Network), a WAN (Wide Area Network), the Internet, a public switched network, or a lease line or the like. The first storage network 6a and second storage network 6b are, for example, a LAN, a WAN, a SAN (Storage Area Network), the Internet, a public switched network, or a lease line or the like.

Communications which are performed via the communication network 5, the communication network 7, the first storage network 6a, or the second storage network 6b are executed, for example, according to a protocol such as TCP/IP, iSCSI (internet Small Computer System Interface), FCP (Fibre Channel Protocol), FICON (Fibre Connection) (registered trademark), ESCON (Enterprise System Connection) (registered trademark), ACONARC (Advanced Connection Architecture) (registered trademark), or FIBARC (Fibre Connection Architecture) (registered trademark), or another such protocol.

The client apparatus 2 is an information processing device (computer) which utilizes the storage area provided by the first storage apparatus 10a via the first server apparatus 3a and is, for example, a personal computer or office computer or the like. Functioning within the client apparatus 2 is a file system, an operating system realized by software modules such as kernels and drivers, and applications.

Fig. 2 shows hardware of the client apparatus 2. As shown in Fig. 2, the client apparatus 2 comprises a CPU 21, a volatile or involatile memory 22 (RAM or ROM), a storage device 23 (for example a hard disk drive or semiconductor storage device (SSD (Solid State Drives)), input devices 24 such as a keyboard and mouse, output devices 25 such as a liquid crystal monitor and printer, and a communication interface (hereinafter called a communication I/F 26) such as an NIC (Network Interface Card) (hereinafter called a LAN adapter 261).

The first server apparatus 3a is an information processing device which provides information processing services to the client apparatus 2 by using a storage area provided by the first storage apparatus 10a. The first server apparatus 3a is configured using a personal computer, mainframe, or office computer or the like. The first server apparatus 3a transmits dataframes (abbreviated to frames hereinbelow) containing data I/O requests (data write requests and data read requests and the like) upon accessing the storage area provided by the first storage apparatus 10a to the first storage apparatus 10a via the first storage network 6a. Note that the frames are Fibre channel frames (FC frames (FC: Fibre Channel), for example.

The second server apparatus 3b is an information processing device which performs information processing by using the storage area provided by the second storage apparatus 10b. The second server apparatus 3b is configured using a personal computer, a mainframe, or an office computer or the like. The second server apparatus 3b transmits a frame containing a data I/O request to the second storage apparatus 10b via the second storage network 6b upon accessing the storage area provided by the second storage apparatus 10b.

Fig. 3 shows hardware of the first server apparatus 3a. As shown in Fig. 3, the first server apparatus 3a comprises a CPU 31, a volatile or involatile memory 32 (RAM or ROM), a storage device 33 (for example a hard disk drive or semiconductor storage device (SSD (Solid State Drives)), input devices 34 such as a keyboard and mouse, output devices 35 such as a liquid crystal monitor and printer, a communication interface (hereinafter called a communication I/F 36) such as an NIC (hereinafter called a LAN adapter 361) and an HBA (hereinafter called an FC adapter 362), and a timer 37 which is configured using a timer circuit or RTC. Note that the second server apparatus 3b which exists on the core side also has a hardware configuration which is the same as or similar to the first server apparatus 3a.

Fig. 4 shows hardware of the first storage apparatus 10a. The first storage apparatus 10a is a disk array device, for example. Note that the second storage apparatus 10b which exists on the core side also has a hardware configuration which is the same as or similar to that of the first storage apparatus 10a. The storage apparatuses 10 receive data I/O requests sent from the server apparatus 3 (first server apparatus 3a or second server apparatus 3b, likewise hereinafter) and transmit data and replies to the server apparatus 3 by accessing the recording medium in response to the received data I/O requests.

As shown in Fig. 4, the storage apparatuses 10 comprise one or more channel substrates 11, one or more processor substrates 12 (microprocessors), one or more drive substrates 13, a cache memory 14, a shared memory 15, an internal switch 16, a storage device 17, and a service processor 18. The channel substrates 11, processor substrates 12, drive substrates 13, cache memory 14, and shared memory 15 are communicably connected via an internal switch 16.

The channel substrate 11 receives the frames sent from the server apparatus 3 and transmits frames, which comprise a processing response to the data I/O request contained in the received frames (read data, a read completion notification, or a write completion notification, for example), to the server apparatus 3.

In response to the data I/O request contained in the frame received by the channel substrate 11, the processor substrate 12 performs processing relating to data transfers (high-speed large capacity data transfers using DMA (Direct Memory Access)) performed between the channel substrate 11, drive substrate 13, and cache memory 14. The processor substrate 12 performs the transfer (delivery), performed via the cache memory 14, of data (data read from storage device 17 and data written to storage device 17) between the channel substrate 11 and the drive substrate 13, and performs staging (reading of data from the storage device 17) and destaging (writing to the storage device 17) of data stored in the cache memory 14.

The cache memory 14 is configured using high-speed accessible RAM (Random Access Memory). The cache memory 14 stores data which is written to the storage device 17 (hereinafter called write data) and data which is read from the storage device 17 (hereinafter abbreviated as read data). The shared memory 15 stores various information which is used to control the storage apparatuses 10.

The drive substrate 13 communicates with the storage device 17 when reading data from the storage device 17 and writing data to the storage device 17. The internal switch 16 is configured using a high-speed crossbar switch, for example. Note that communications performed via the internal switch 16 are performed according to a protocol such as the Fibre Channel protocol, iSCSI, or TCP/IP.

The storage device 17 is configured comprising a plurality of storage drives 171. The storage drives 171 are, for example, hard disk drives of types such as SAS (Serial Attached SCSI), SATA (Serial ATA), FC (Fibre Channel), and PATA (Parallel ATA), or semiconductor storage devices (SSD), or the like.

The storage device 17 provides the storage area of the storage device 17 to the server apparatus 3 by taking, as units, the logical storage areas provided by controlling the storage drives 171 in a RAID (Redundant Arrays of Inexpensive (or Independent) Disks) system, for example. The logical storage areas are logical devices (LDEV 172 (LDEV: Logical Device)) which are configured using RAID groups (parity groups), for example.

Furthermore, the storage apparatus 10 provides logical storage areas (hereinafter referred to as LU (Logical Units, Logical Volumes), which are configured using LDEV 172, to the server apparatus 3. The storage apparatus 10 manages correspondence (relationships) between the LU and LDEV 172, and the storage apparatus 10 specifies the LDEV 172 corresponding to the LU or the LU corresponding to the LDEV 172 based on this correspondence.

Fig. 5 shows the hardware configuration of the channel substrate 11. As shown in Fig. 5, the channel 11 comprises an external communication interface (hereinafter abbreviated as external communication I/F 111) comprising ports (communication ports) which communicate with the server apparatus 3, a processor 112 (frame processing chip and frame transfer chip), a memory 113, and an internal communication interface (hereinafter abbreviated to internal communication I/F 114) which comprises a port (communication port) for communications with the processor substrate 12.

The external communication I/F 111 is configured using an NIC (Network Interface Card) or an HBA (Host Bus Adaptor) or the like. The processor 112 is configured using a CPU (Central Processing Unit) or an MPU (Micro Processing Unit) or the like. The memory 113 is a RAM (Random Access Memory) or a ROM (Read Only Memory). The memory 113 stores microprograms. The processor 112 implements various functions which are provided by the channel substrate 11 by reading the microprograms from the memory 113 and executing these microprograms. The internal communication I/F 114 communicates with the processor substrate 12, the drive substrate 13, the cache memory 14, and the shared memory 15 via the internal switch 16.

Fig. 6 shows the hardware configuration of the processor substrate 12. The processor substrate 12 comprises an internal communication interface (hereinafter abbreviated as internal communication I/F 121), a processor 122, and a (high-speed accessible) memory 123 (local memory) for which the access performance by the processor 122 is higher than for the shared memory 15. The memory 123 stores microprograms. The processor 122 implements various functions provided by the processor substrate 12 by reading the microprograms from the memory 123 and executing these microprograms.

The internal communication I/F 121 performs communications with the channel substrate 11, the drive substrate 13, the cache memory 14, and the shared memory 15 via the internal switch 16. The processor 122 is configured using a CPU, an MPU, and DMA (Direct Memory Access) and so on. The memory 123 is a RAM or ROM. The processor 122 is able to access either of the memory 123 and shared memory 15.

Fig. 7 shows the hardware configuration of the drive substrate 13. The drive substrate 13 comprises an internal communication interface (hereinafter abbreviated as the internal communication I/F 131), a processor 132, a memory 133, and a drive interface (hereinafter abbreviated as drive I/F 134). The memory 133 stores microprograms. The processor 132 implements various functions provided by the drive substrate 13 by reading the microprograms from the memory 133 and executing these microprograms. The internal communication I/F 131 communicates with the channel substrate 11, the processor substrate 12, the cache memory 14, and the shared memory 15 via the internal switch 16. The processor 132 is configured using a CPU or MPU. The memory 133 is a RAM or ROM, for example, and the drive I/F 134 performs communications with the storage device 17.

The service processor 18 shown in Fig. 4 performs control and state monitoring of various configuration elements of the storage apparatus 10. The service processor 18 is a personal computer or office computer or the like. The service processor 18 continually communicates with the components of the storage apparatuses 10 such as the channel substrate 11, the processor substrate 12, the drive substrate 13, the cache memory 14, the shared memory 15, and the internal switch 16 via communication means such as the internal switch 16 or LAN, and acquires operation information and the like from each of the components, providing this information to a management apparatus 19. Further, the service processor 18 performs configuration, control and maintenance (including software installation and updates) for each of the components on the basis of the control information and operation information sent from the management apparatus 19.

The management apparatus 19 is a computer which is communicably connected via a LAN or the like to the service processor 18. The management apparatus 19 comprises a user interface which employs a GUI (Graphical User Interface) or CLI (Command Line Interface) or the like for controlling and monitoring the storage apparatuses 10.

Fig. 8 shows the basic functions which the storage apparatus 10 comprises. As shown in Fig. 8, the storage apparatuses 10 comprise I/O processing units 811. The I/O processor 811 comprises a data write processing unit 8111 which performs processing relating to writing to the storage device 17 and a data read processing unit 8112 which performs processing relating to reading data from the storage device 17.

Note that the functions of the I/O processing units 811 are realized by hardware which the channel substrate 11, the processor substrate 12, and the drive substrate 13 of the storage apparatuses 10 comprise or as a result of the processor 112, 122, and 132 reading and executing the microprograms stored in the memory 113, 123, and 133.

Fig. 9 is a flowchart explaining the basic processing (hereinafter called write processing S900) which is carried out by the data write processing unit 8111 of the I/O processing unit 81 in a case where the storage apparatus 10 (the first storage apparatus 10a or the second storage apparatus 10b, likewise hereinbelow) receives a frame containing a data write request from the server apparatus 3 (first server apparatus 3a or second server apparatus 3b). The write processing S900 will be explained hereinbelow with reference to Fig. 9. Note that, in the description hereinbelow, the character "S" which is a reference numeral prefix denotes a processing step.

As shown in Fig. 9, a data write request frame transmitted from the server apparatus 3 is first received by the channel substrate 11 of the storage apparatus 10 (S911, S912).

Upon receiving a frame containing a data write request from the server apparatus 3, the channel substrate 11 issues notification to that effect to the processor substrate 12 (S913).

Upon receiving the notification from the channel substrate 11 (S921), the processor substrate 12 generates a drive write request on the basis of the data write request of this frame, stores the write data in the cache memory 14, and sends back notification that the notification was received to the channel substrate 11 (S922). The processor substrate 12 transmits the generated drive write request to the drive substrate 13 (S923).

Meanwhile, upon receiving the reply from the processor substrate 12, the channel substrate 11 transmits a completion notification to the server apparatus 3 (S914) and the server apparatus 3 receives the completion notification from the channel substrate 11 (S915).

Upon receipt of a drive write request from the processor substrate 12, the drive substrate 13 registers the received drive write request in a write processing wait queue (S924).

The drive substrate 13 reads, if necessary, the drive write request from the write processing wait queue (S925), reads the write data designated by the read drive write request from the cache memory 14, and writes the write data thus read to the storage device (storage drive 171) (S926). The drive substrate 13 issues a report (completion report) to the effect that the writing of the write data in response to the drive write request is complete to the processor substrate 12 (S927).

The processor substrate 12 receives a completion report which is sent from the drive substrate (S928).

Fig. 10 is a flowchart which illustrates I/O processing (hereinafter read processing S1000) which is performed by the read processing unit 8112 of the I/O processing unit 811 of the storage apparatus 10 in a case where the storage apparatus 10 receives a frame containing a data read request from the server apparatus 3. Read processing S1000 will be explained hereinbelow with reference to Fig. 10.

As shown in Fig. 10, the frame transmitted from the server apparatus 3 is first received by the channel substrate 11 of the storage apparatus 10 (S1011, S1012).

Upon receiving a frame containing a data read request from the server apparatus 3, the channel substrate 11 issues notification to that effect to the processor substrate 12 and the drive substrate 13 (S1013).

Upon receipt of this notification from the channel substrate 11 (S1014), the drive substrate 13 reads the data designated by the data read request contained in the frame (designated by an LBA (Logical Block Address), for example) from the storage device (storage drive 171) (S1015). Note that, if read data exists in the cache memory 14 (cache hit), the read processing from the storage device 17 (S1015) is omitted.

The processor substrate 12 writes data which is read by the drive substrate 13 to the cache memory 14 (S1016). Further, the processor substrate 12 transfers, if necessary, the data written to the cache memory 14 to the channel substrate 11 (S1017).

Upon receipt of the read data which is continually sent from the processor substrate 12, the channel substrate 11 sequentially transmits the data to the server apparatus 3 (S1018). When the transmission of read data is complete, the channel substrate 11 transmits a completion notification to the server apparatus 3 (S1019). The server apparatus 3 receives read data and completion notifications (S1020, S1021).

Fig. 11 shows the main functions which the client apparatus 2 comprises. As shown in Fig. 11, the client apparatus 2 comprises various functions such as an application 211, a file system 212, and a kernel/driver 213. These functions are implemented as a result of the CPU 21 of the client apparatus 2 reading and executing programs which are stored in the memory 22 and storage device 23.

The file system 212 realizes I/O functions to and from the logical volumes (LU) in file units or directory units for the client apparatus 2. The file system 213 is, for example, FAT (File Allocation Table), NTFS, HFS (Hierarchical File System), ext2 (second extended file system), ext3 (third extended file system), ext4 (fourth extended file system), UDF (Universal Disk Format), HPFS (High Performance File system), JFS (Journaled File System), UFS (Unix File System), VTOC (Volume Table Of Contents), XFS or the like.

The kernel/driver 213 is realized by executing a kernel module or driver module which constitutes the software of the operating system. A kernel module comprises, in the case of the software which is executed by the client apparatus 2, programs for realizing the basic functions which the operating system comprises such as process management, process scheduling, storage area management, and the handling of hardware interrupt requests. A driver module comprises hardware which the client apparatus 2 comprises, and a program for communicating with the kernel modules and peripheral devices which are used connected to the client apparatus 2.

Fig. 12 shows the main functions which the first server apparatus 3a comprises as well as main information (data) which is managed by the first server apparatus 3a. As shown in Fig. 12, in the first server apparatus 3a, a virtualization controller 305 which provides a virtual environment and one or more virtual machines 310 which operate under the control of the virtualization controller 305 are realized.

In each of the virtual machines 310, various functions, namely, of a file sharing processing unit 311, a file system 312, a data operation request reception unit 313, a data replication/moving processing unit 314, a file access log acquisition unit 317, and a kernel/driver 318 are realized.

Note that the virtual environment may be realized by means of any system such as a so-called host OS-type system in which an operating system is interposed between the hardware of the first server apparatus 3a and the virtualization controller 305 or as a hypervisor-type system in which no operating system is interposed between the hardware of the first server apparatus 3a and the virtualization controller 305. Further, each of the functions of the data operation request reception unit 313, the data replication/moving processing unit 314, and the file access log acquisition unit 317 may also be realized as functions of the file system 312 or may be realized as functions independent from the file system 312.

As shown in Fig. 12, the virtual machines 310 manage information (data) such as a replication information management table 331 and file access log 335 (data). This information is read continually from the first storage 10a to the first server apparatus 3a and stored in the memory 32 and storage device 33 of the first server apparatus 3a.

Among the functions shown in Fig. 12, the file sharing processing unit 311 provides a file sharing environment to the client apparatus 2. The file sharing processing unit 311 provides functions corresponding, for example, to a protocol such as NFS (Network File System), CIFS (Common Internet File System), or AFS (Andrew File System).

The file system 312 provides an I/O function for I/Os to and from files (or directories) which are managed in logical volumes (LU) provided by the first storage apparatus 10a, for the client apparatus 2. The file system 312 is, for example, FAT (File Allocation Table), NTFS, HFS (Hierarchical File System), ext2 (second extended file system), ext3 (third extended file system), ext4 (fourth extended file system), UDF (Universal Disk Format), HPFS (High Performance File system), JFS (Journaled File System), UFS (Unix File System), VTOC (Volume Table Of Contents), XFS or the like.

The data operation request reception unit 313 receives requests relating to data operations transmitted from the client apparatus 2 (hereinafter referred to as data operation requests). Data operation requests include replication start requests, requests to update replication files, requests to refer to the replication files, synchronization requests, requests to access the metadata, requests to refer to file entities, recall requests, and requests to update the entity of a stub file, and the like, which will be described subsequently.

Note that stubbing refers to holding metadata, for the data of a file (or directory), in the first storage apparatus 10a but not managing the entity of the file (or directory) data in the first storage apparatus 10a, holding the entity in the second storage apparatus 10b alone. If the first server apparatus 3a receives a data I/O request for which the entity of the file (or directory) is required for a stubbed file (or directory), the entity of the file (or directory) is transmitted from the second storage apparatus 10b to the first storage apparatus 10a (written back (known as recall hereinbelow)).

The data replication/moving processing unit 314 performs the exchange of control information (including flags and tables) and the transfer of data (including file metadata and entity) between the first server apparatus 3a and the second server apparatus 3b or the first storage apparatus 10a and the second storage apparatus 10b, and performs management of various tables such as a replication information management table 331 and metadata 332, for replication start processing S2400, stub candidate selection processing S2500, synchronization processing S2900, stub file entity referencing processing S3000, stub file entity update processing S3100, virtual machine restoration processing S3300, directory image creation processing S3200, on-demand restoration processing S3300, which will be described subsequently.

The kernel/driver 318 shown in Fig. 12 is realized by executing a kernel module or driver module which constitutes of the software of the operating system. A kernel module comprises, in the case of the software which is executed by the first server apparatus 3a, programs for realizing the basic functions which the operating system comprises such as process management, process scheduling, storage area management, and the handling of hardware interrupt requests. A driver module comprises hardware which the first server apparatus 3a comprises, and a program for communicating with the kernel modules and peripheral devices which are used connected to the first server apparatus 3a.

When access is made to files stored in the logical volumes (LU) of the storage apparatus 10 (file updates (write, update), and when file reading, file opening and file closing are performed, the file access log acquisition unit 317 shown in Fig. 12 stores information indicating the access content (history) (hereinafter called access logs) as a file access log 335 by assigning a time stamp based on date and time information which is acquired from the timer device 37.

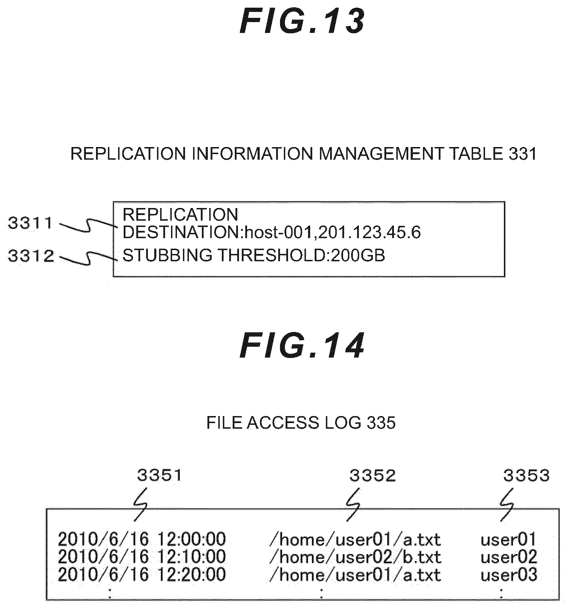

Fig. 13 shows an example of the replication information management table 331. As shown in Fig. 13, the replication information management table 331 is configured with a host name 3311 for the replication destination (a network address such as an IP address, for example), a threshold 3312 (stubbing threshold, described subsequently) which is used to determine whether or not stubbing is to be performed.

Fig. 14 shows an example of the file access log 335. As shown in Fig. 14, the file access log 335 records an access log which is configured by one or more records comprising respective items including an access date and time 3351, a file name 3352, and a user ID 3353.

Among such items, the access date and time 3351 is configured with the date and time when access to the file (or directory) is made. The file name 3352 is configured with the file name (or directory name) of the file (or directory) serving as the access target. The user ID 3353 is configured with the user ID of the user that accessed the file (or directory).

Fig. 15 shows the main functions which the second server apparatus 3b comprises as well as main information (data) which is managed by the second server apparatus 3b. As shown in Fig. 15, the second server apparatus 3b comprises the various functions of the file sharing processing unit 351, the file system 352, the data replication/moving processing unit 354, and the kernel/driver 358. Note that the functions of the data replication/moving processing unit 354 may also be realized as the functions of the file system 352 or may be realized as functions which are independent from the file system 352.

Further, as shown in Fig. 15, the second server apparatus 3b manages a restore log 365 and a file access log 368.

The file sharing processing unit 351 provides file sharing information to the first server apparatus 3a. The file sharing processing unit 351 is realized using the HTTP protocol, for example.

The file system 352 uses the logical volumes (LU) which are provided by the second storage apparatus 10b and provides an I/O function for I/Os to and from the logical volumes (LU) in file units or directory units, for the first server apparatus 3a. In addition, the file system 352 provides files and directories of a certain time point in the past including updates to the first server apparatus 3a by performing version management for the files and directories. As will be described subsequently, the file system which performs version management holds files and/or directories without overwriting files and directories when creating and deleting files, modifying file data and metadata, when creating and deleting directories, and when adding and deleting directory entries.

The file system 352 may, for example, be one file system such as ext3cow, or a file system that is combined with an existing file system such as ext3, ReiserFS, or FAT as in the case of Wayback.

The data replication/moving processing unit 354 performs processing relating to moving and duplicating data between the first storage apparatus 10a and the second storage apparatus 10b.

The kernel/driver 358 is implemented by executing a kernel module or driver module constituting the software of the operating system. The kernel module includes, in the case of the software which is executed by the second server apparatus 3b, programs for realizing the basic functions which the operating system comprises such as process management, process scheduling, storage area management, and the handling of hardware interrupt requests. A driver module comprises hardware which the second server apparatus 3b comprises, and a program for communicating with the kernel modules and peripheral devices which are used connected to the second server apparatus 3b.

Fig. 16 shows an example of the restore log 365. If the creation of a directory image (called a restore), described subsequently, is performed, the restore log 365 records restoration-related processing content by means of the first server apparatus 3a or the second server apparatus 3b. As shown in Fig. 16, the restore log 365 is configured from one or more records comprising each of the items date and time 3651, event 3652, and restore target file 3653.

Among these items, the date and time 3651 is configured as the date and time when the restore-related event was executed. The event 3652 is configured as information indicating the content of the executed event (restore start, restore execution and the like). The restore target file 3653 is configured as information (path name, file name (or directory name or the like) specifying a restore target file (or directory).

The content of the file access log 368 managed by the second server apparatus 3b basically matches the content of the file access log 335 in the first server apparatus 3a. Consistency between the two logs is secured as a result of notification regarding the content of the file access log 335 being sent continually from the first server apparatus 3a to the second server apparatus 3b.

Details of the file system 312 which the first server apparatus 3a comprises will be provided next.

Fig. 17 is an example of the data structure which the file system 312 manages in the logical volumes (LU) (hereinafter called the file system structure 1700). As shown in Fig. 17, the file system structure 1700 includes the respective storage areas of the superblock 1711, the inode management table 1712, and the data block 1713, which stores the file entity (data).

Of these, the superblock 1711 stores information relating to the file system 312 (the capacity, usage amount, and unused capacity and the like of the storage areas handled by the file system). The superblock 1711 is, as a general rule, provided for each disk segment (partition configured in a logical volume (LU)). Specific examples of the information stored in the superblock 1711 include the number of data blocks in a segment, the block size, the number of unused blocks, the number of unused inodes, the number of mounts in the segment, and the time elapsed since the time of the latest conformity check.

The inode management table 1712 stores management information (hereinafter called inodes) of files (or directories) which are stored in logical volumes (LU). The file system 312 performs management by mapping a single inode to a single file (or directory). When only directory-related information is included in an inode, this is known as a directory entry. If access is made to a file, the data blocks of the access target file are accessed by referring to the directory entry. For example, if a file "/home/user-01/a.txt" is accessed, as shown in Fig. 20, the data blocks of the access target file are accessed in directory entry order and starting with inode number 2, then 10, then 15, and then 100.

Fig. 19 shows the concept of inodes in a general file system (for example, a file system comprising a UNIX (registered trademark) operating system). Further, Fig. 20 shows an example of an inode management table 1712.

As these drawings show, an inode includes information such as an inode number 2011 which is an identifier for differentiating between individual inodes, an owner 2012 of the file (or directory), access rights 2013 configured for the file (or directory), file size 2014 of the file (or directory), last update date and time 2015 of the file (or directory), parent directory 2016 of the directory configured if the inode is a directory entry, child directory 2017 of the directory configured if the inode is a directory entry, and information specifying data blocks storing the data entity of the file (called block address 2018 hereinbelow).

As shown in Fig. 21, in addition to the content of the inode management table 1712 of a normal typical file system which is shown in Fig. 20, the file system 312 of this embodiment also manages a stubbing flag 2111, a metadata synchronization requirement flag 2112, a entity synchronization flag 2113, a replication flag 2114, a read only flag 2115, and a link 2116.

Note that, according to a replication-based management system and stub-based management system, if a duplicate of the metadata (including the flags of every type shown in Fig. 21) of the files stored in the first storage apparatus 10a is also stored in the second storage apparatus 10b (if the metadata is replicated), when the metadata of one apparatus is updated by the synchronization processing S2900, described subsequently, notification to that effect is also issued to another apparatus. As a result, the consistency between the content of the metadata of the first storage apparatus 10a and the metadata of the second storage apparatus 10b is secured substantially in real time.

In the drawings, the stubbing flag 2111 is configured with information indicating whether files (or directories) corresponding to the inodes have been stubbed. Here, stubbing means deleting only the entity in the file data from the first storage apparatus 10a which is the moving source when a file (or directory) is moved (migrated) from the first storage apparatus 10a to the second storage apparatus 10b and not deleting the metadata in the file data so that the metadata remains in the source first storage apparatus 10a.

Note that stub refers to metadata remaining in the first storage apparatus 10a in this case. If the file (or directory) corresponding to the inode is stubbed, stubbing flag 2111 is configured as ON and if the file is not stubbed, stubbing flag 2111 is configured as OFF.

The metadata synchronization requirement flag 2112 is configured with information indicating whether there is a requirement for synchronization (requirement to match content) between the metadata of the file (or directory) of the first storage apparatus 10a which is the replication source and the metadata of the file (or directory) of the second storage apparatus 10b which is the replication destination. If metadata synchronization is required, the metadata synchronization requirement flag 2112 is configured as ON and, if synchronization is not necessary, the metadata synchronization requirement flag 2112 is configured as OFF.

The entity synchronization requirement flag 2113 is configured with information indicating whether there is a requirement for synchronization (requirement to match content) between the data entity of a file in the replication-source first storage apparatus 10a and the data entity of a file in the replication-destination second storage apparatus 10b. If synchronization is required for the data entity of the file, the entity synchronization requirement flag 2113 is configured as ON and, if synchronization is not required, the entity synchronization requirement flag 2113 is configured as OFF.

The metadata synchronization requirement flag 2112 and the entity synchronization requirement flag 2113 are continually referred to in synchronization processing S2900, described subsequently. If the metadata synchronization requirement flag 2112 or the entity synchronization requirement flag 2113 are ON, the metadata or entity of the first storage apparatus 10a and the metadata or entity of the second storage apparatus 10b which is the duplicate are automatically synchronized.

The replication flag 2114 is configured with information indicating whether the file (or directory) corresponding to the inode is currently the target of management using a replication management system which will be described subsequently. If the file corresponding to the inode is currently the target of management using the replication management system, the replication flag 2114 is configured as ON and if the file is not the target of replication management, the replication flag 2114 is configured as OFF.

The read only flag 2115 is configured with information indicating whether the file (or directory) corresponding to the inode can be written by the client apparatus 2. In cases where the file (or directory) corresponding to the inode cannot be written, the read only flag 2115 is configured as ON, and if this file (or directory) can be written, the read only flag 2115 is configured as OFF.

Note that main components other than the client apparatus 2, namely, the file system 312 and the data replication/moving processing unit 314, for example, are able to write to files for which the read only flag 2115 has been configured as ON.

Note that the configuration of the read only flag 2115 is mutually independent from the configuration of the access rights 2013. For example, the client apparatus 2 is unable to write to files for which the read only flag 2115 is ON and which are configured as writable by way of the access rights 2013. As a result, writing to files can be prevented while maintaining the view of well-known access rights such as ACL and UNIX permissions.

If the files corresponding to the inodes are managed using the replication management system, described subsequently, the link 2116 is configured with information representing the file replication destination (for example, a path name specifying the storage destination (including the version ID described subsequently), a RAID group identifier, a block address, a URL (Uniform Resource Locator), and LU, and so on).

The file system 352 which the second server apparatus 3b will be described in detail next. In addition to the file system 312 which the first server apparatus 3a comprises, the file system 352 comprises a version management table 221 which is required to manage and operate file (or directory) version.

Fig. 22 shows an example of the version management table 221. The file system 352 maintains one version management table 221 for each single file (or directory). Note that the general term for files and directories is file system objects.

As shown in Fig. 22, the version management table 221 records entries which are configured from one or more records comprising each of the items of the storage date and time 2211 and version ID 2212. The storage date and time 2211 is configured with the date and time when the file (or directory) is stored in the file system 352. The version ID 2212 is configured with the name required to access a specific version of the file (or directory). The name which is configured in the version ID 2212 consists, for example, of consecutive numbers or a character string (generally called UUID) of a certain length which is generated randomly. The version ID 2212 may be configured either by the user (client apparatus 2 or first server apparatus 3a, for example) or by a system (file system 352, for example).

The file system 352 creates the version management table 221 when the file (or directory) is first created and, when all the versions of the file (or directory) have been deleted, the file system 352 deletes the version management table 221. Note that the file system 352 deletes old file versions. For example, the file system 352 configures the number of earlier versions to be held and deletes the versions of files exceeding this earlier version hold count after these versions are created. As a result of this deletion, the file system 352 prevents the capacity from becoming exhausted due to earlier versions.

By issuing a referencing request for a specific path name to the file system 352, the user is able to acquire version information on the file (or directory) stored in the file system 352. Here, the version information corresponds to all the entries stored in the version management table 221. For example, the user is able to acquire version information on the file with the path name denoted by "/home/user01/a.txt" by means of a request to reference "/home/user01/a.txt?version=list."

By issuing a referencing request to the file system 352 with the version ID 2212 added to the path name, the user is able to read a specific version of the file (or directory) which is stored in the file system 352. For example, the version denoted by "v2" of a file with a path name denoted by "/home/user01/a.txt" can be acquired by a request to refer to "/home/user01/a.txt?version=v2."

By issuing a file (or directory) update request for the path name of the file system 352, the user is able to store a new file (or directory). For example, when the user performs a file update request to update the path name denoted by "/home/user01/a.txt," the file system 352 acquires the current time and creates the version ID 2212. The file system 352 then creates a new entry in the version management table 221, whereupon files associated with this entry are newly stored. Earlier files are not overwritten at this time.

Fig. 23 shows an example of the directory image management table 231. In order to manage the directories on which file restoration was performed, the file system 312 in the first server apparatus 3a stores and holds the directories in the first storage apparatus 10a.

As shown in Fig. 23, the directory image management table 231 stores a directory 2311, a restoration date and time 2312 and a deletion date and time 2313.

Of these, the directory 2311 is configured with a destination directory, in the file system 312 where a directory image is restored. The restoration date and time 2312 is configured with the date and time of the directory image restored. The restoration date and time 2313 is configured with the date and time that the restoration destination directory is deleted from the file system 312. The restoration date and time 2312 and the deletion date and time 2313 may be configured by the user or may be configured by the file system 312. For example, the entry "/mnt/fs01/.histroy/09_05/ 2010/9/5 00:00:00 2010/10/5 00:00:00" means that a file (or directory) that exists in the file system 312 is restored at the point 2010/9/5 00:00:00 to the directory denoted by /mnt/fs01/.history/09_05/ in the file system 312, and is deleted by the file system 312 at 2010/10/5/5 00:00:00. Metadata of the directories or files in the top level directory (root directory) in the directory hierarchical structure is restored as will be described subsequently. This is an example, that is, metadata may be restored in a lower directory or file and the directory or file of a predetermined level may also be directly restored.

### =Schematic operation=

The operation of the information processing system 1 with the foregoing configuration will be described next.

Fig. 24 illustrates the processing performed by the information processing system 1 (hereinafter called replication start processing S2400) if the first server apparatus 3a accepts a request to the effect that replication targeting files stored in one storage apparatus 10a is started (hereinafter called replication start request).

Upon receiving a replication start request from the client apparatus 2, the first server apparatus 3a starts management, using a replication-based management system, of files designated as targets in the request. Note that, other than receiving the replication start request from the client apparatus 2 via the communication network 5, the first server apparatus 3a also accepts a replication start request which is generated internally in the first server apparatus 3a, for example.

Here, a replication-based management system is a system for managing file data (metadata and entity) in both the first storage apparatus 10a and second storage apparatus 10b.

In a replication-based management system, when the entity or metadata of a file stored in the first storage apparatus 10a is updated, the metadata or entity of a file in the second storage apparatus 10b, which are managed as a duplicate of the file (or archive file), is updated synchronously or asynchronously. As a result of implementing the replication-based management system, the consistency between the data (metadata or entity) of a file stored in the first storage apparatus 10a and the data (metadata or entity) of the file stored in the second storage apparatus 10b as the duplicate is synchronously or asynchronously ensured (guaranteed).

Note that the metadata of a file (archive file) in the second storage apparatus 10b may also be managed as a file entity. Thus, the replication-based management system can also be implemented even in a case where specifications differ between the file system 312 of the server apparatus 3a and the file system 352 of the second server apparatus 3b.

As shown in Fig. 24, upon receiving the replication start request (S2411), the first server apparatus 3a reads the data (metadata and entity) of the file designated by the received replication start request from the first storage apparatus 10a and transmits the read file data to the second server apparatus 3b (S2412).

Upon receiving the data of the file which is sent from the first server apparatus 3a, the second server apparatus 3b stores the received data in the second storage apparatus 10b (S2413).

Note that, during this transfer, the data replication/moving processing unit 314 of the first server apparatus 3a configures the replication flag 2114 of the source file as ON (S2414).

Fig. 25 illustrates processing which is executed by the information processing system 1 (hereinafter called stubbing candidate selection processing S2500) when the files managed by the replication management system stored in the first storage apparatus 10a (files for which the replication flag 2114 is configured as ON, hereinafter called replication files) are configured as candidates for this stubbing. Stubbing candidate selection processing S2500 will be described hereinbelow with reference to Fig. 25.

The first server apparatus 3a monitors the remaining capacity of the file storage area progressively (in real time, at regular intervals, or with predetermined timing, and so on).

When the remaining capacity of the storage area (hereinafter called the file storage area) of the first storage apparatus 10a assigned as file storage areas to the file system 312 is less than a preset threshold (hereinafter called a stubbing threshold), the first server apparatus 3a selects stubbing candidates from among replication files stored in the first storage apparatus 10a in accordance with a predetermined selection standard (S2511). Note that the predetermined selection standard may, for example, be an older last update date and time or a lower access frequency.

Upon selecting stubbing candidates, the first server apparatus 3a then configures the stubbing flags 2111 of the selected replication files as ON, the replication flags 2114 as OFF, and the metadata synchronization flags 2112 as ON (S2512). Note that the first server apparatus 3a acquires the remaining capacity of a file storage area from information which is managed by the file system 312, for example.

Fig. 26 illustrates processing which is executed in the information processing system 1 (hereinafter called stubbing processing S2600) when the files selected as stubbing candidates by the stubbing candidate selection processing S2500 are actually stubbed. The stubbing processing S2600 is, for example, executed with preset timing (for example, after the stubbing candidate selection processing S2500). The stubbing processing S2600 will be described with reference to the drawings hereinbelow.

As shown in Fig. 26, the first server apparatus 3a extracts one or more files selected as stubbing candidates (files for which the stubbing flag 2111 is configured as ON) from among the files stored in the file storage area of the first storage apparatus 10a (S2611).

Further, the first server apparatus 3a deletes the extracted file entity from the first storage apparatus 10a and configures an invalid value as information representing the storage destination of the first storage apparatus 10a of the file from among the extracted file metadata (for example, configures a NULL value or zero in a field in which the file storage destination of the metadata is configured (a field in which the block address 2018 is configured, for example)), and actually stubs the files selected as stubbing candidates. Further, at the time, the first server apparatus 3a configures the metadata synchronization requirement flag 2112 as ON (S2612).

Fig. 27 illustrates processing which is executed in the information processing system 1 (hereinafter called a replication file update processing S2700) if the first server apparatus 3a receives an update request for updating the replication file stored in the file storage area in the first storage apparatus 10a from the client apparatus 2. The replication file update processing S2700 will be described with reference to the drawings.

Upon receiving an update request for updating the replication file (S2711), the first server apparatus 3a updates the data (metadata, entity) of the replication file stored in the first storage apparatus 10a in accordance with the received update request (S2712).

Further, the first server apparatus 3a configures the metadata synchronization requirement flag 2112 of the replication file as ON if the metadata is updated and configures the entity synchronization requirement flag 2113 of the replication file as ON if the entity of the replication file is updated (S2713).

Fig. 28 illustrates processing (hereinafter called replication file referencing processing S2800) which is executed by the information processing system 1 if the file system 312 of the first server apparatus 3a receives a request for referencing the replication file stored in the file storage area of the first storage apparatus 10a from the client apparatus 2. The replication file referencing processing S2800 will be described hereinbelow with reference to Fig. 28.

Upon receiving an update request to update the replication file (S2811), the file system 312 of the first server apparatus 3a reads the data (metadata or entity) of the replication file from the first storage apparatus 10a (S2812), generates information that is sent back to the client apparatus 2 on the basis of the read data, and transmits the generated reply information to the client apparatus 2 (S2813).

Fig. 29 illustrates processing that is executed in the information processing system 1 (hereinafter called metadata access processing S2900) if the file system 312 of the first server apparatus 3a receives an access request (reference request or update request) for the metadata of the stubbed file (file for which the stubbing flag 2111 has been configured as ON) from the client apparatus 2 or the like. The metadata access processing S2900 will be described hereinbelow with reference to Fig. 29.

As shown in Fig. 29, upon receiving an access request for accessing the metadata of the stubbed file (S2911), the first server apparatus 3a acquires metadata of the first storage apparatus 10a which is the access request target and performs referencing according to the content of the access request (transmits the reply information to the client apparatus 2 on the basis of the read metadata), or performs a metadata update (S2912). Further, if the content of the metadata is updated, the first server apparatus 3a configures the metadata synchronization requirement flag 2112 of the file as ON (S2913).

Thus, if an access request to access a stubbed file is generated and the access request targets only the metadata of the file, the first server apparatus 3a processes the access request by using the metadata stored in the first storage apparatus 10a. Hence, if the access request targets only the metadata of the file, a reply can be sent back quickly to the client apparatus 2.

Fig. 30 illustrates processing (hereinafter called stub file entity referencing processing S3000) which is executed in the information processing system 1 if the first server apparatus 3a receives a request to reference the entity of the stubbed file (a file for which the stubbing flag 2111 is configured as ON, referred to hereinbelow as a stub file) from the client apparatus 2. The stub file entity referencing processing S3000 will be described hereinbelow with reference to Fig. 30.

Upon receipt of the referencing request to reference the entity of the stub file from the client apparatus 2 (S3011), the first server apparatus 3a references the acquired metadata to determine whether the entity of the stub file is stored in the first storage apparatus 10a (S3012). Here, this determination is made based on whether a valid value has been configured for information (the block address 2018, for example) representing a storage destination for the entity of the stub file in the acquired metadata, for example.

As a result of this determination, if the entity of the stub file is stored in the first storage apparatus 10a, the first server apparatus 3a reads the entity of the stub file from the first storage apparatus 10a, generates information which is sent back to the client apparatus 2 on the basis of the read entity and transmits the generated reply information to the client apparatus 2 (S3013).

If, however, as a result of the determination, the entity of the stub file is not stored in the first storage apparatus 10a, the first server apparatus 3a issues a request to the second server apparatus 3b to provide the entity of the stub file (hereinafter called a recall request) (S3014). Note that the entity acquisition request need not necessarily be a request to acquire the whole entity by way of a single acquisition request, rather, only part of the entity may instead be requested a plurality of times.

Upon receipt of the entity for the stub file which has been sent by the second server apparatus 3b in response to the acquisition request (S3015), the first server apparatus 3a generates reply information on the basis of the received entity and transmits the generated reply information to the client 2 (S3016).

Furthermore, the first server apparatus 3a stores the entity received from the second server apparatus 3b in the first server apparatus 3a, and configures content, representing the storage destination in the first storage apparatus 10a for the file, in the information (for example, block address 2018) indicating the storage destination of the entity of the file of the metadata in the stub file. Further, the first server apparatus 3a configures the stubbing flag 2111 of the file as OFF, the replication flag 2114 as ON, and the metadata synchronization requirement flag 2112 as ON respectively (modifies the file from a stub file to a replication file) (S3017).

Note that the metadata synchronization requirement flag 2112 is configured as ON in order to automatically synchronize the content, after the fact, of the stubbing flag 2111 and the replication flag 2114 of the stub file between the first storage apparatus 10a and the second storage apparatus 10b.

Fig. 31 illustrates processing which is executed in the information processing system 1 (hereinafter called stub file entity update processing S3100) if the first server apparatus 3a receives an update request to update the entity of the stub file from the client apparatus 2. Hereinafter, the stub file entity update processing S3100 will be described with reference to Fig. 31.

Upon receipt of an update request to update the entity of the stub file (S3111), the first server apparatus 3a acquires the metadata of the stub file serving as the update request target and determines whether the entity of the stub file is stored in the first storage apparatus 10a on the basis of the acquired metadata (S3112). Note that the method of determination is similar to that for stub file entity referencing processing S3000.

As a result of this determination, if the entity of the stub file is stored in the first storage apparatus 10a, the first server apparatus 3a updates the entity of the stub file which is stored in the first storage apparatus 10a according to the content of the update request and configures the entity synchronization requirement flag 2113 of the stub file as ON (S3113).

If, on the other hand, the entity of the stub file is not stored in the first storage apparatus 10a, the first server apparatus 3a transmits an acquisition request (recall request) for the entity of the stub file to the second server apparatus 3b (S3114).

Upon receiving the file entity which has been sent from the second server apparatus 3b in response to the request (S3115), the first server apparatus 3a updates the content of the received entity according to the update request content and stores the updated entity in the first storage apparatus 10a as the entity of the stub file. Further, the first server apparatus 3a configures the stubbing flag 2111 of the stub file as OFF, the replication flag 2114 as OFF, and the metadata synchronization requirement flag 2112 as ON respectively (S3116).

### <Processing during file restoration>

Fig. 32 illustrates processing for creating a directory image at a certain earlier time (hereinafter called directory image creation processing S3200). The directory image creation processing S3200 will be explained with reference to the drawings hereinbelow.

The file system 312 of the first server apparatus 3a first transmits, to the second server apparatus 3b, an acquisition request for the metadata of a directory that exists in the top level directory (hereinafter called the root directory) and the metadata of a file that exists in the root directory, in a directory configuration which is configured in the first storage apparatus 10a at a certain earlier time (that is, a directory configuration stored in the second storage apparatus 10b and including data representing the directory hierarchical structure, directory data (metadata), and file data (metadata and entity), hereinafter called a directory image) (S3211).

In this embodiment, when the metadata of directories that exist in the root directory and metadata of files that exist in the root directory is mentioned, this metadata includes the directories and files that exist in the root directory but does not include the directories and files in the directories that exist in the root directory.

Upon receiving the acquisition request, the second server apparatus 3b acquires, from the second storage apparatus 10b, the requested metadata of directories that exist in the root directory and the metadata of the files that exist in the root directory (S3212), and transmits the acquired metadata to the first storage apparatus 10a (S3213).

Upon receiving metadata from the second server apparatus 3b (S3213), the first server apparatus 3a restores the received metadata-based directory image to the first storage apparatus 10a (S3214). At this time, the first server apparatus 3a configures the metadata synchronization requirement flag 2112 as ON, the entity synchronization requirement flag 2113 as ON, and the read only flag 2115 as ON respectively. Note that all of the restored files are based on metadata alone, and hence these files are all in a stubbed state and the stubbing flag 2111 is configured as ON.

Thus, the first server apparatus 3a restores the directory image in the first storage apparatus 10a. The file system 312 of the first server apparatus 3a acquires a directory image at regular intervals as shown in Fig. 23, for example, and manages these images continuously in a directory management table. Note that the mode in which the directory images are acquired can be suitably modified and the timing for their acquisition may be whenever a predetermined event occurs in the first server apparatus 3a such as when the client apparatus issues a file history inquiry to the first server apparatus 3a, for example. In this case, it is assumed that the client is likely to access earlier versions of the files and that directory images belonging to earlier versions are acquired.

Fig. 33 illustrates processing (hereinafter called on-demand restoration processing S3300) in which directory images managed by the first server apparatus 3a are restored at a certain earlier time after the directory image creation processing S3200 shown in Fig. 32. On-demand restoration processing S3300 is described hereinbelow with reference to Fig. 33.

Upon receiving a data I/O request for a certain file from the client apparatus 2 after services have started (S3311), the first server apparatus 3a checks whether metadata of the file targeted by the received data I/O request (hereinafter called the access target file) exists in the first storage apparatus 10a (whether, after services have started, the metadata has already been restored to the first storage apparatus 10a) (S3312).

If metadata has been restored to the first storage apparatus 10a, the first server apparatus 3a performs processing which corresponds to the received data I/O request (the foregoing replication file update processing S2700, the replication file referencing processing S2800, the metadata access processing S2900, the stub file entity referencing processing S3000, and the stub file entity update processing S3100) depending on the target (metadata or entity) of the received data I/O request, the type of data I/O request (referencing request or update request), whether same is managed using a replication-based management system (whether or not the replication flag 2114 is ON), and whether the file is stubbed (whether the stubbing flag is ON), and sends back a reply to the client apparatus 2 (S3318).

If, on the other hand, the metadata of the access target file has not been restored, the first server apparatus 3a acquires data for restoring a directory image starting with the root directory and as far as the directory level (directory tier) where the access target file exists, from the second server apparatus 3b (second storage apparatus 10b) (S3313 to S3315), and uses the acquired data to restore directory images to the first storage apparatus 10a, starting with the root directory and as far as the directory level (S3316).

Furthermore, the first server apparatus 3a configures the stubbing flag 2111 of the access target file as ON, the replication flag 2114 as OFF, the metadata synchronization requirement flag 2112 as ON, and the read only flag 2115 as ON respectively (S3317).

The first server apparatus 3a then performs processing which corresponds to the received data I/O request depending on the received data I/O request target and type, the management system, and whether stubbing exists, and sends back a reply to the client apparatus 2 (S3318).

Fig. 34 shows an aspect in which, as a result of the repeated generation of a data I/O request, a directory image is gradually restored to the first storage apparatus 10a through the on-demand restoration processing S3300 described earlier.

In Fig. 34, with regard to directories denoted by highlighted character strings (underlined character strings), the metadata of these directories has been restored but the metadata of lower directories has not yet been restored. Furthermore, where directories denoted by characters that have not been highlighted are concerned, the metadata of directories in these directories has also already been restored. In addition, as for files denoted by highlighted characters, the metadata of these files has been restored but the entities thereof have not yet been restored. Further, as for files indicated by characters that have not been highlighted, the entities of these files have already been restored.

(O) in Fig. 34 is a directory image which is managed in the first server apparatus 3a (first storage apparatus 10a) at a certain earlier point and which has been replicated in the second server apparatus 3b (the whole directory image which is ultimately restored).

(A) in Fig. 34 is a directory image immediately after the directory image creation processing S3200 (in a state where the first server apparatus 3a has not yet received a data I/O request). At this stage, although the metadata of the directories "/dir1" and "/dir2" which exist in the root directory "/" has been restored, the metadata of lower directories has not yet been restored. Furthermore, although the metadata of the file "a.txt" which exists in the root directory "/" has not been restored, the entity has not yet been restored.
(B) in Fig. 34 is a state after receiving a data I/O request for a file "c.txt" which exists in the directory "/dir1" from the client apparatus 2 in the state in (A). Since the data I/O request for the file "c.txt" is received from the client apparatus 2, the metadata of the directory "/dir11" and the metadata "/c.txt" is restored.
(C) in Fig. 34 is a state after receiving a data I/O request for a file "b.txt" which exists in the directory "/dir2" from the client apparatus 2 in the state in (B). As shown in Fig. 34, since the data I/O request for the file "b.txt" is received from the client apparatus 2, the metadata "/b.txt" is restored. Note that, since the metadata "/b.txt" which exists in "/dir2" is restored, the characters of "/dir2" are shown without highlighting.
(D) in Fig. 34 is a state after receiving a data I/O request (update request) for the file "b.txt" from the client apparatus 2 in the state (C). Since the data I/O request (update request) for the file "b.txt" is received from the client apparatus 2, the entity of the file "b.txt" is restored.

Fig. 35 illustrates processing (hereinafter called the directory image deletion processing S3500) to delete a directory image at a certain earlier time. The directory image deletion processing S3500 will be described hereinbelow with reference to Fig. 35.

The first server apparatus 3a first monitors whether or not the directories which the file system 312 has configured in the first storage apparatus 10a at a certain earlier time have been archived beyond the date and time configured in the file system 312 (S3511). If the directories have been archived beyond the date and time, the file system 312 deletes the directories (S3512).

As explained earlier, in the information processing system 1 of this embodiment, only the metadata of the directories that exist in the root directory and the metadata of the files which exist in the root directory are restored by means of the directory image creation processing S3200 after the directory image creation processing has been carried out in the first server apparatus 3a and up to the point before the data I/O request is received. Furthermore, subsequently, each time a data I/O request is issued for a file which has not yet been restored from the client apparatus 2 to the first server apparatus 3a, the directory image is gradually restored to the first server apparatus 3a (first storage apparatus 10a).

Hence, in comparison with a case where the whole directory image is restored for the purpose of file restoration, when a directory image that is required in order to process a data I/O request is gradually restored, for the purpose of file restoration, instead of restoring the whole directory image before starting to receive the data I/O request, the time required for file restoration can be shortened and the effect on user tasks and the like can be prevented.

Furthermore, the resources of the first storage apparatus 10a can be conserved up until the directory image has been completely restored. Consumption of the storage capacity is curbed up until the whole directory image has been completely restored.

### <Processing details>

Details of the processing which is performed in the information processing system 1 will be described next.

Fig. 36 is a flowchart illustrating the details of the replication start processing S2400 shown in Fig. 24. [This processing] will be described hereinbelow with reference to Fig. 24.

The first server apparatus 3a monitors in real time whether a replication start request is received from the client apparatus 2 or the like (S3611). Upon receiving a replication start request from the client apparatus 2 or the like (S3611: YES) (S2411 in Fig. 24), the first server apparatus 3a issues an inquiry to the second server apparatus 3b to inquire after the storage destination (RAID group identifier, block address, and so on) of the data (metadata and entity) of the file designated in the received replication start request (S3612).

When the above inquiry is made (S3621), the second server apparatus 3b searches the unused areas of the second storage apparatus 10b to determine the storage destination of the file data and issues notification of the determined storage destination to the first server apparatus 3a (S3622).

Upon receipt of the notification (S3613), the first server apparatus 3a reads the data (metadata and entity) of the file designated in the received replication start request from the first storage apparatus 10a (S3614) (S2412 in Fig. 24) and transmits the read file data to the second server apparatus 3b together with the reported storage destination (S3615) (S2413 in Fig. 24).

Furthermore, the first server apparatus 3a configures the replication flag 2114 of the metadata of the file (metadata of the file stored in the first storage apparatus 10a) as ON and configures the metadata synchronization requirement flag 2112 as ON respectively (S3616) (S2414 in Fig. 24).

Note that, by configuring the metadata synchronization requirement flag 2112 as ON, consistency is synchronously or asynchronously ensured (guaranteed), by means of the foregoing synchronization processing S2900, between the metadata of a file stored in the first storage apparatus 10a and the metadata of a file stored in the second storage apparatus 10b as the duplicate.

If, on the other hand, file data is received from the first server apparatus 3a (S3623), the second server apparatus 3b stores the received file data in the position of the second storage apparatus 10b specified by the storage destination received together with the file (S3624).

Fig. 37 is a flowchart illustrating the details of the stubbing candidate selection processing S2500 shown in Fig. 25. [This processing] will be described hereinbelow with reference to Fig. 37.

The first server apparatus 3a continually monitors whether the remaining capacity of the file storage area is less than a stubbing threshold (S3711, S3712) and, upon detecting that the remaining capacity of the file storage area is less than the stubbing threshold, the first server apparatus 3a selects a stubbing candidate from among the replication files stored in the first storage apparatus 10a in accordance with the foregoing predetermined selection standard (S3712) (S2511 in Fig. 25).

Furthermore, upon selecting a stubbing candidate (S3713), the first server apparatus 3a configures the stubbing flag 2111 of the selected replication file as ON, the replication flag 2114 as OFF, and the metadata synchronization requirement flag 2112 as ON respectively (S3714) (S2512 in Fig. 25).

Fig. 38 is a flowchart which illustrates the details of the stubbing processing S2600 shown in Fig. 26. [This processing] will be described hereinbelow with reference to Fig. 38.

The first server apparatus 3a continually extracts the files (files for which the stubbing flag 2111 has been configured as ON) selected as stubbing candidates from among the files stored in the file storage areas of the first storage apparatus 10a (S3811, S3812).

Further, the first server apparatus 3a deletes the extracted file entity from the first storage apparatus 10a (S3813), configures an invalid value as information representing the storage destination of the first storage apparatus 10a of the file from among the extracted file metadata (for example, configures a NULL value or zero in a field in which the file storage destination of the metadata is configured (the block address 2018, for example)) (S3814), and configures the metadata synchronization requirement flag 2112 as ON (S3815) (S2611 in Fig. 26).

Fig. 39 is a flowchart illustrating the details of the replication file update processing S2700 shown in Fig. 27. [This processing] will be described hereinbelow with reference to Fig. 39.

The first server apparatus 3a monitors in real time whether or not an update request to update the replication file is received from the client apparatus 2 (S3911). Upon receiving an update request (S3911: YES) (S2711 in Fig. 27), the first server apparatus 3a updates the data (metadata or entity) of the replication file serving as the target of the update request which is stored in the first storage apparatus 10a in accordance with the received update request (S3912) (S2712 in Fig. 27).

Further, the first server apparatus 3a configures the metadata synchronization requirement flag 2112 of the replication file as ON if the metadata is updated (S3913) and configures the entity synchronization requirement flag 2113 of the replication file as ON if the entity of the replication file is updated (S3914) (S2713 in Fig. 27).

Fig. 40 is a flowchart illustrating the details of the replication file referencing processing S2800 shown in Fig. 28. [This processing] will be described hereinbelow with reference to Fig. 40.

The first server apparatus 3a monitors in real time whether or not a referencing request to reference the replication file is received from the client apparatus 2 (S4011). Upon receiving a referencing request (S4011: YES) (S2811 in Fig. 28), the first server apparatus 3a reads the data (metadata or entity) of the replication file from the first storage apparatus 10a (S4012) (S2812 in Fig. 28), generates information that is sent back to the client apparatus 2 on the basis of the read data, and transmits the generated reply information to the client apparatus 2 (S4013) (S2813 in Fig. 28).

Fig. 41 is a flowchart illustrating the details of the metadata access processing S2900 shown in Fig. 29. [This processing] will be described hereinbelow with reference to Fig. 41.

The first server apparatus 3a monitors in real time whether or not an access request (referencing request or update request) to access the metadata of a stubbed file is received from the client apparatus 2 (S4111).

Upon receiving an access request to access the metadata of the stubbed file (S4111: YES) (S2911 in Fig. 29), the first server apparatus 3a acquires the metadata of the first storage apparatus 10a targeted by the received access request (S4112), and refers to the metadata (transmits reply information based on the read metadata to the client apparatus 2) (S1514) or updates the metadata (S4115) (S2912 in Fig. 29) in accordance with the received access request (S4113). If the content of the metadata is updated (S4115), the first server apparatus 3a configures the metadata synchronization requirement flag 2112 of the file as ON (S2913 in Fig. 29).

Fig. 42 is a flowchart illustrating the details of the stub file entity referencing processing S3000 shown in Fig. 30. [This processing] will be described hereinbelow with reference to the drawings.

Upon receiving a referencing request to reference the entity of the stub file from the client apparatus 2 (S4211: YES) (S3011 in Fig. 30), the first server apparatus 3a determines whether or not the entity of the stub file is stored in the first storage apparatus 10a (S4212) (S3012 in Fig. 30).

If the entity of the stub file is stored in the first storage apparatus 10a (S4212: YES), the first server apparatus 3a reads the entity of the stub file from the first storage apparatus 10a, generates information which is to be sent back to the client apparatus 2 based on the entity thus read, and transmits the generated reply information to the client apparatus 2 (S4213) (S3013 in Fig. 30).

If, on the other hand, the entity of the stub file is not stored in the first storage apparatus 10a (S4212: NO), the first server apparatus 3a issues a request for the entity of the stub file to the second server apparatus 3b (recall request) (S4214) (S3014 in Fig. 30). At this time, the first server apparatus 3a requests a specific version of the file of the second server apparatus 3b by using the link 2116 which is contained in the metadata of the stub file.

Upon receipt of the entity of the stub file that is sent from the second server apparatus 3b in response to the acquisition request (S4221, S4222, S4215) (S3015 in Fig. 30), the first server apparatus 3a generates reply information based on the received entity and transmits the generated reply information to the client apparatus 2 (S4216) (S3016 in Fig. 30).

The first server apparatus 3a stores the entity received from the second server apparatus 3b in the first storage apparatus 10a and configures content representing the storage destination in the first storage apparatus 10a of this file in information (the block address 2018, for example) representing the file entity storage destination of the metadata of the stub file (S4217).

Furthermore, the first server apparatus 3a configures the stubbing flag 2111 of the file as OFF, the replication flag 2114 as ON, and the metadata synchronization requirement flag 2112 as ON respectively (S4218) (S3017 in Fig. 30).

Fig. 43 is a flowchart illustrating the details of the stub file entity update processing S3100 shown in Fig. 31. [This processing] will be described hereinbelow with reference to Fig. 43.

Upon receiving an update request to update the entity of the stub file from the client apparatus 2 (S4311: YES) (S3111 in Fig. 31), the first server apparatus 3a determines whether or not the entity of the stub file is stored in the first storage apparatus 10a (S4312) (S3112 in Fig. 31).

If the entity of the stub file is stored in the first storage apparatus 10a (S4312: YES), the first server apparatus 3a updates the entity of the stub file stored in the first storage apparatus 10a according to the update request content (S4313) and configures the entity synchronization requirement flag 2113 of the stub file as ON (S4314) (S3113 in Fig. 31).

If, on the other hand, as a result of the foregoing determination, the entity of the stub file is not stored in the first storage apparatus 10a (S4312: NO), the first server apparatus 3a transmits an acquisition request (recall request) to acquire the entity of the stub file to the second server apparatus 3b (S4315) (S3114 in Fig. 31).

Upon receiving an entity of the file that is sent from the second server apparatus 3b in response to the foregoing request (S4321, S4322, and S4316) (S3115) in response to the foregoing request, the first server apparatus 3a updates the content of the received entity in accordance with the update request content (S4317), and stores the updated entity in the first storage apparatus 10a as the entity of the stub file (S4318) (S3116 in Fig. 31).

Further, the first server apparatus 3a configures the stubbing flag 2111 of the stub file as OFF, the replication flag 2114 as OFF, and the metadata synchronization requirement flag 2112 as ON respectively (S4319).

Fig. 44 is a flowchart illustrating the details of the directory image creation processing S3200 shown in Fig. 32. [This processing] will be illustrated with reference to Fig. 44.

First, the first server apparatus 3a creates a directory to which a directory image of a certain earlier time is to be restored (S4411). The first server apparatus 3a creates new entries in the directory image management table 231 by configuring the path of the created directory, the current date and time, and a date and time obtained by adding the number of days the directory image is held to the current time in the directory 2311, the restoration date and time 2312, and the deletion date and time 2313. Here, the number of days the directory image is held is configured in the file system 312. This is the number of days until the restoration destination directory is deleted after being created.

The first server apparatus 3a subsequently acquires as follows, from the second server apparatus 3b, the metadata of the directories which exist in the root directory and the metadata of the files which exist in the root directory of the directory image of the date and time 2312 when the file system 312 performs restoration.

(1) The first server apparatus 3a requests version information for the root directory from the second server apparatus 3b (S4412).
(2) Upon receiving the acquisition request (S4421), the second server apparatus 3b acquires version information on the requested root directory from the second storage apparatus 10b and transmits the acquired version information to the first server apparatus 3a (S4422).
(3) Upon receiving version information from the second server apparatus 3b (S4413), the first server apparatus 3a retrieves the closest storage date and time 2211 not exceeding the restoration date and time 2312 from the version information in the root directory (version management table 221), and acquires the version ID 2212 which corresponds to the storage date and time thus retrieved (S4414).
(4) The first server apparatus 3a transmits an acquisition request to the second server apparatus 3b to acquire the directory metadata which exists in the root directory with the acquired version ID 2212 as well as the metadata of the files which exist in the root directory (S4415) (S3211 in Fig. 32).
(5) Upon receiving the acquisition request (S4423), by acquiring the metadata of the requested root directory and performing processing similar to S4412 to S4414 on the directory entry, the second server apparatus 3b acquires the metadata of the directories which exist in the root directory of the restored version and the metadata of the files which exist in the root directory of the restored version from the second storage apparatus 10b and transmits the acquired metadata to the first storage apparatus 10a (S4424) (S3212, S3213 in Fig. 32).

Upon receiving metadata from the second server apparatus 3b (S4416) (S3213 in Fig. 32), the first server apparatus 3a subsequently configures (restores) the directory image according to the received metadata in the first storage apparatus 10a (S4417) (S3214 in Fig. 32). At this time, the first server apparatus 3a configures the metadata synchronization requirement flag 2112 as ON, the entity synchronization requirement flag 2113 as ON and the read only flag as ON respectively (S4418).

Figs. 45 and 46 are flowcharts illustrating the details of the on-demand restoration processing S3300 shown in Fig. 33. [This processing] will be described hereinbelow with reference to Figs. 45 and 46.

First, when a file restoration request is issued to the first server apparatus 3a via the client apparatus 2, the user accesses the desired restoration destination directory among the restoration destination directories 2311. Upon receiving a data I/O request for a predetermined restoration target file which is the file restoration target from the client apparatus 2 (S4511: YES) (S3311 in Fig. 33), the first server apparatus 3a checks whether or not the metadata of a file (access target file) which is the target of the received I/O request exists in the restoration destination directory configured in the first storage apparatus 10a (S4512) (S3312 in Fig. 33).

Further, if the metadata is restored in the first storage apparatus 10a (S4512: YES), the first server apparatus 3a performs processing which corresponds to the received data I/O request depending on the target and type of the received data I/O request, the management system, and the presence of stubbing, and sends back a reply to the client apparatus 2 (S4513) (S3318 in Fig. 33).

Meanwhile, if the metadata of the access target file has not been restored to the first storage apparatus 10a (S4512: NO), the first server apparatus 3a calls the parent directory restoration processing in order to restore the directory image starting with the root directory and extending as far as the directory level where the access target file exists (S4514).

The first server apparatus 3a then performs restoration as follows, on the second server apparatus 3b, of the directory image starting with the root directory and extending as far as the directory level (directory tier) where the access target file exists in the file system at the date and time 2312 when the file system 312 performs restoration (see Fig. 46).

(1) The first server apparatus 3a issues a request to the second server apparatus 3b for version information on the directory directly in the root directory, that is, on the top directory level, among the directories which have not been restored to the first storage apparatus 10a on the basis of path information in the data I/O request (S4611).
(2) Upon receiving the acquisition request (S4621), the second server apparatus 3b acquires the version information on the top directory thus requested from the second storage apparatus 10b and transmits the acquired version information to the first server apparatus 3a (S4622).
(3) Upon receiving version information from the second server apparatus 3b (S4612), the first server apparatus 3a retrieves the closest storage date and time 2211 not exceeding the restoration date and time 2312 from the version information of the restoration directory (version management table 221), and acquires the version ID 2212 which corresponds to the storage date and time thus retrieved (S4613).
(4) The first server apparatus 3a transmits an acquisition request to the second server apparatus 3b to acquire the directory metadata which exists in the directory with the acquired version ID 2212 as well as the metadata of the files which exist in the root directory (S4614) (S3313 in Fig. 33).
(5) Upon receiving the acquisition request (S4623), by acquiring the metadata of the requested directory and performing processing similar to S4611 to S4616 on the directory entry, the second server apparatus 3b acquires the metadata of the directories which exist in the directory image of the restored version and the metadata of the files which exist in the directory of the restored version from the second storage apparatus 10b and transmits the acquired metadata to the first storage apparatus 10a (S4624) (S3214, S3315 in Fig. 33).
(6) Upon receiving data which has been sent from the second server apparatus 3b (S4615), the first server apparatus 3a uses the data to restore the directory image to the first storage apparatus 10a (S4616) (S3316 in Fig. 33). In step S4617, the first server apparatus 3a determines whether the parent directory restoration is complete, that is, whether the directory image has been restored as far as the directory where the metadata for the file to be restored is obtained, and when the parent directory restoration processing is complete, the first server apparatus 3a configures the stub plug 2111 of the access target file as ON, the replication flag 2114 as OFF, the metadata synchronization requirement flag 2112 as ON, and the read only flag as ON respectively (S4515) (S3317 in Fig. 33).

The first server apparatus 3a then performs processing which corresponds to the received data I/O request depending on the target and type of the received data I/O request, the management system, and the presence of stubbing, and sends back a reply to the client apparatus 2 (S4516) (S3318 in Fig. 33). Note that when the first file server issues a request for the file entity to the second file server (recall request: S4214 in Fig. 42), not all but instead part of the file entity may be requested.

As described in detail hereinabove, in the information processing system 1 according to this embodiment, at the time of the file restoration of the first server apparatus 3a, the first server apparatus 3a associates the date and time with the directory and, before the first server apparatus 3a starts to receive a data I/O request, the second server apparatus 3b transmits a directory image which extends from the top directory to a predetermined lower level of the version associated with the directory in the data for the file stored in the second storage apparatus 10b to the first server apparatus 3a, and the first storage apparatus 3a restarts the reception of the data I/O request after the directory image sent from the second server apparatus 3b is restored to the first storage apparatus 10a.

Fig. 47 is a flowchart illustrating the details of the directory image deletion processing S3500 shown in Fig. 35. [This processing] will be described hereinbelow with reference to Fig. 47.

First, the first server apparatus 3a refers to the directory image management table 231 at regular intervals and confirms whether or not the date and time 2313 when the directory 2311 which is the file restoration destination was deleted is exceeded (S4711, S4711). If this date and time 2313 is exceeded, the first server apparatus 3a determines this as timing for deleting the directory image (S4712: YES), and deletes the directory image (S4713). Finally, the entry containing the deleted directory 2311 is deleted from the directory image management table 231.

Thus, in the information processing system 1 according to this embodiment, at the time of the file restoration of the first server apparatus 3a, because not all the directory images which exist in the first storage apparatus 10a are restored, rather, only directory images extending from the top directory as far as a predetermined lower level are restored, the time required for file restoration can be shortened in comparison with a case where all the directory images which exist in the first storage apparatus 10a are restored at a certain earlier time, and services can be restarted sooner. In comparison with a case where all the directory images are restored, the load on the information processing system 1 is minimal and the storage consumption amount of the first storage apparatus 10a is small.

### (Second embodiment)

In an information processing system 1 according to a second embodiment, the same effects as the first embodiment are realized even in cases where the second server apparatus 3b is unable to transmit version information to the first server apparatus 3a. The second embodiment differs from the first embodiment with regard to part of the directory image creation processing S3200 and part of the on-demand restoration processing S3300.

A second embodiment will be described hereinbelow with reference to the drawings. The file system 312 of the first server apparatus 3a holds the version management table 231 in the root directory.

Fig. 48 is a flowchart illustrating the details of the directory image creation processing S3200 shown in Fig. 32. [This processing] will be described hereinbelow with reference to Fig. 48.

First, the first server apparatus 3a creates a directory to which a directory image of a certain earlier time is to be restored (S4811). The first server apparatus 3a creates new entries in the directory image management table 231 by configuring the path of the created directory, the current date and time, and a date and time obtained by adding the number of days the directory image is held to the current time in the directory 2311, the restoration date and time 2312, and the deletion date and time 2313. Here, the number of days the directory image is held is configured in the file system 312. This is the number of days until the restoration destination directory is deleted after being created.

The first server apparatus 3a subsequently acquires as follows, from the second server apparatus 3b, the metadata of the directories which exist in the root directory and the metadata of the files which exist in the root directory of the directory image of the date and time 2312 when the file system 312 performs restoration.

(1) The first server apparatus 3a acquires version information from the version management table 221 of the root directory held in the file system 312 (S4812).
(2) The first server apparatus 3a then retrieves the closest storage date and time 2211 not exceeding the restoration date and time 2312 from the version information of the root directory (version management table 221), and acquires the version ID 2212 which corresponds to the storage date and time thus retrieved (S4813).
(3) The first server apparatus 3a transmits an acquisition request to the second server apparatus 3b to acquire the directory metadata which exists in the root directory with the acquired version ID 2212 as well as the metadata of the files which exist in the root directory (S4814) (S3211 in Fig. 32).
(4) Upon receiving the acquisition request (S4821), the second server apparatus 3b acquires the metadata of the requested root directory, the metadata of the directories which exist in the root directory of the restored version and the metadata of the files which exist in the root directory of the restored version from the second storage apparatus 10b and transmits the acquired metadata to the first storage apparatus 10a (S4822) (S3212, S3213 in Fig. 32).

Upon receiving the metadata from the second server apparatus 3b (S4815) (S3213 in Fig. 32), the first server apparatus 3a subsequently configures (restores) the directory image according to the received metadata in the first storage apparatus 10a (S4816) (S3214 in Fig. 32). At this time, the first server apparatus 3a configures the metadata synchronization requirement flag 2112 as ON, the entity synchronization requirement flag 2113 as ON and the read only flag as ON respectively (S4817).

Fig. 49 is a flowchart illustrating the details of parent directory restoration processing in the on-demand restoration processing S3300 shown in Fig. 33. [This processing] will be described hereinbelow using Figs. 45 and 49.

S4511 to S4513 in Fig. 45 are the same as the processing according to the first embodiment.

When parent directory restoration processing is called (S4514), the first server apparatus 3a then performs restoration, as follows, of the directory image starting with the root directory and as far as the directory level (directory tier) where the access target file exists in the file system of the date and time 2312 when the file system 312 performs restoration.

(1) The first server apparatus 3a acquires a link 2116 of the directory of the top directory level among directories which have not been restored to the first storage apparatus 10a, and transmits, to the second server apparatus 3b, an acquisition request for metadata of the directories which exist in the directory indicated by the acquired link 2116 and metadata of the files which exist in the root directory (S4911) (S3211 in Fig. 32).
(2) Upon receiving the acquisition request (S4921), the second server apparatus 3b acquires, from the second storage apparatus 10b, the requested directory metadata, the metadata of directories that exist in the directory of the restored version, and the metadata of the files which exist in the root directory of the restored version, and transmits the acquired metadata to the first storage apparatus 10a (S4822) (S3212, S3213 in Fig. 32).
(3) Upon receiving data which has been sent from the second server apparatus 3b (S4912), the first server apparatus 3a uses the data to restore the directory image to the first storage apparatus 10a (S4913) (S3316 in Fig. 33).
(4) The first server apparatus 3a repeats S4911 to S4913 as far as the directory level where the access target file exists (S4914).

Once the parent directory restoration processing S4514 is complete, the first server apparatus 3a executes S4515 to S4516 in Fig. 45 and ends the processing.

Thus, in the information processing system 1 according to this embodiment, the same effects as the first embodiment can be obtained even in cases where the second server apparatus 3b does not provide version information to the outside.

In addition, since the search for the version ID using the version information is minimal r in comparison with the first embodiment, the performance relative to the client apparatus 2 can be improved (the speed of response can be reduced).

Although explained using the foregoing embodiments, the embodiments serve to facilitate an understanding of the present invention and should not be interpreted as limiting the present invention in any way.

For example, in the foregoing description, each of the functions of the file sharing processing unit 311, the file system 312, the data operation request reception unit 313, the data replication/moving processing unit 314, the file access log acquisition unit 317, and the kernel/driver 318 are described as being realized in the virtual machine 310, but these functions need not necessarily be realized in the virtual machine 310.

Moreover, in the description above, the area which is described as being restored to the first storage apparatus 10a extends from the root directory to the access target file, but a configuration in which part of this range is restored using a similar method is also possible. For example, restoration of the parent directory of the access target file and the access target file is also possible.

### [Reference Signs List]

1 Information processing system
2 Client apparatus
3a First server apparatus
3b Second server apparatus
5 Communication network
6a First storage network
6b Second storage network
7 Communication network
10a First storage apparatus
10b Second storage apparatus
50 Edge
51 Core
311 File sharing processing unit
312 File system
313 Data operation request reception unit
314 Data replication/moving processing unit
317 File access log acquisition unit
318 Kernel/driver
331 Replication information management table
335 File access log
365 Restore log
368 File access log

## Claims

1. An information processing system (1), comprising:
a first server apparatus (3a) which comprises a first file system (312) and which is configured to receive I/O requests from a client apparatus (2);
a first storage apparatus (10a) which comprises storage of the first server apparatus (3a);
a second server apparatus (3b) which comprises a second file system (352) and is communicably connected to the first server apparatus (3a); and
a second storage apparatus (10b) which comprises storage of the second server apparatus (3b);
wherein the first server apparatus (3a) is configured to transmit data of a file which is the target of the I/O request and which is stored in the first storage apparatus (10a) to the second server apparatus (3b), and
the second server apparatus (3b) is configured to store the data which is sent from the first server apparatus (3a) in the second storage apparatus (10b) while holding a directory image of the first file system (312) in the second file system (352),
wherein
the second server apparatus (3b) is configured to acquire a first directory image of a predetermined level in the directory image that is configured in the file system of the first server apparatus (3a) from the directory image in the second storage apparatus (10b) and to transmit the first directory image to the first server apparatus (3a),
the first server apparatus (3a) is configured to, upon receiving an I/O request for a file which is to be restored from the client apparatus (2) after the first directory image sent from the second server apparatus (3b) is restored to the first storage apparatus (10a), determine whether or not a second directory image which is required to process the received I/O request exists in the first directory image of the first storage apparatus (10a) and, if the second directory image does not exist, issue a request to the second server apparatus (3b) to request the second directory image,
the second server apparatus (3b) is configured to, when the request is sent from the first server apparatus (3a), read the second directory image from the second storage apparatus (10b) and transmit the second directory image to the first server apparatus (3a), and the first server apparatus (3a) is configured to restore the second directory image to the first storage apparatus (10a),
the first server apparatus (3a) is configured to restore an object directory image, which includes the first directory image and the second directory image, to the first storage apparatus (10a), and
the second file system (352) of the second server apparatus (3b) is configured to, whenever a file system object is created or updated, manage the created or updated file system object using a different version ID, and the first server apparatus (3a) is configured to utilize the version ID in the process of restoring the object directory.

2. The information processing system (1) according to claim 1,
wherein the first file system (312) of the first server apparatus (3a) is configured to issue a request to the second server apparatus (3b) to request metadata of directories which exists in a root directory restored at an earlier time as well as metadata of files which exists in the root directory,
wherein the second server apparatus (3b) is configured to, upon receiving the request, acquire the metadata from the second storage apparatus (10b) and transmit the metadata to the restoration destination directory configured in the first server apparatus (3a), and
wherein the first server apparatus (3a) is configured to configure a directory image which comprises the root directory and file system objects in the root directory in accordance with the metadata of the restoration destination directory, and to restore the directory image to the first storage apparatus (10a) as the first directory image.

3. The information processing system (1) according to claim 2,
wherein the first server apparatus (3a) is configured to acquire the metadata of the file which exists in the object directory image from the first storage apparatus (10a) and to issue a request for data which is the entity of the file to the second server apparatus (3b) on the basis of the metadata,
wherein the second server apparatus (3b) is configured to acquire the data from the second storage apparatus (10b) on the basis of the request and to transmit the data to the first server apparatus (3a), and
wherein the first server apparatus (3a) is configured to, upon acquiring the data, store the data in the file of the object directory image of the first storage apparatus (10a).

4. The information processing system (1) according to claim 1,
wherein the first file system (312) comprises a flag for restraining, without changing the view of access rights to the file system objects, writing to the metadata or data of file system objects which belong to the first file system (312), and
wherein the first server apparatus (3a) is configured to configure the flag for the object directory image in a read only state for the metadata or data.

5. The information processing system (1) according to claim 1,
wherein the first server apparatus (3a) is configured to create a restoration destination directory where the first directory image is restored, to record a restoration date and time when the first directory image was restored to the restoration destination directory in a directory image management table (231) together with the restoration destination directory, and to execute a plurality of recordings of the restoration destination directory and the restoration date and time to the directory image management table (231) with predetermined timing.

6. The information processing system (1) according to claim 1,
wherein the second file system (352) of the second server apparatus (3b) is configured to, whenever a file system object is created or updated, manage the created or updated file system object using the different version ID and the date and time the creation or update was executed.

7. The information processing system (1) according to claim 6,
wherein the first server apparatus (3a) is configured to determine a specific version ID from among the version IDs of the file system objects belonging to the first directory image on the basis of the version ID information and the date and time information, as well as the restoration date of the file to be restored, and to transmit the acquisition request of the file system object specified by the specific version ID to the second server apparatus (3b), and
wherein the second server apparatus (3b) is configured to acquire a first directory image including the file system object of the specific version ID from the second storage apparatus (10b) and to transmit the first directory image to the first server apparatus (3a), and the first server apparatus (3a) is configured to restore the first directory image to the first storage apparatus (10a).

8. The information processing system (1) according to claim 7,
wherein the first server apparatus (3a) is configured to configure the file system object specified by the specific version ID as the file system object managed by means of the closest date to the file restoration date.

9. The information processing system (1) according to claim 1,
wherein the first server apparatus (3a) is configured to, upon receiving an I/O request for the file to be restored from the client apparatus (2), check whether metadata of the file exists in the first directory image configured in the restoration destination directory from the client apparatus (2),
wherein the first server apparatus (3a) is configured to, if the metadata of the file does not exist in the first directory image, repeat the request for the metadata of the second directory image to the second server apparatus (3b), the acquisition of metadata from the second storage apparatus (10b) by the second server apparatus (3b), and the transmission of the acquired metadata to the first server apparatus (3a) until the file metadata is obtained as the metadata of the second directory image in a lower level which includes the level just in the first directory image on the basis of path information in the I/O request, and
wherein the first server apparatus (3a) is configured to, after the metadata of the restoration target file has been restored, configure a specific directory image according to the metadata and subsequently store this directory image in the first storage apparatus (10a).

10. The information processing system (1) according to claim 9,
wherein the first server apparatus (3a) is configured to, upon receiving an I/O request to update the restoration target file which exists in the specific directory image from the client apparatus (2), issue a request for the entity of the restoration target file to the second server apparatus (3b),
wherein the second server apparatus (3b) is configured to acquire the entity from the second storage apparatus (10b) on the basis of the request and to transmit the entity to the first server apparatus (3a), and
wherein the first server apparatus (3a) is configured to store the entity in the restoration target file of the specific directory image.

11. The information processing system (1) according to claim 10,
wherein the first server apparatus (3a) is configured to, upon issuing a request for the entities of the files to the second server apparatus (3b), issue a request for some of the entities rather than all of the entities of the files to the second server apparatus (3b).

12. The information processing system (1) according to claim 6,
wherein the first server apparatus (3a) is configured to create a restoration destination directory where the first directory image is restored, to record a restoration date and time when the first directory image was restored to the restoration destination directory in a directory image management table (231) together with the restoration destination directory, and to execute a plurality of recordings of the restoration destination directory and the restoration date and time to the directory image management table (231) with predetermined timing, and
wherein the first server apparatus (3a) is configured to restore the metadata of the restoration target file on the basis of the first directory image stored in the restoration destination directory at a predetermined restoration date and time for which there was a request from the client apparatus (2) among a plurality of restoration dates and times which exist in the directory management table (231).

13. The information processing system (1) according to claim 1,
wherein the first server apparatus (3a) is configured to, for the first directory image stored in the first storage apparatus (10a), check the days and hours which have elapsed since the restoration date of the first directory image and, when it is determined that the elapsed days and hours exceed predetermined days and hours, delete the first directory image from the first storage apparatus (10a).

14. A file restoration method of an information processing system (1) which comprises a first server apparatus (3a) which comprises a first file system (312) and receives I/O requests from a client apparatus (2), a first storage apparatus (10a) which comprises storage of the first server apparatus (3a); a second server apparatus (3b) which comprises a second file system (352) and which is communicably connected to the first server apparatus (3a); and a second storage apparatus (10b) which comprises storage of the second server apparatus (3b), the first server apparatus (3a) transmitting data of a file which is the target of the I/O request and which is stored in the first storage apparatus (10a) to the second server apparatus (3b), and the second server apparatus (3b) storing the data which is sent from the first server apparatus (3a) in the second storage apparatus (10b) while holding a directory image of the first file system (312) in the second file system (352),
wherein
the second server apparatus (3b) acquires a first directory image of a predetermined level among the directory images configured in the file system of the first server apparatus (3a) from the directory image in the second storage apparatus (10b) and transmits the first directory image to the first server apparatus (3a),
upon receiving, from the client apparatus (2), an I/O request for a file to be restored after the first directory image sent from the second server apparatus (3b) has been restored to the first storage apparatus (10a), the first server apparatus (3a) determines whether or not a second directory image which is required in order to process the received I/O request exists in the first directory image of the first storage apparatus (10a), and if the second directory image does not exist, issues a request to the second server apparatus (3b) to request the second directory image,
when the request is sent from the first server apparatus (3a), the second server apparatus (3b) reads the second directory image from the second storage apparatus (10b) and transmits the second directory image to the first server apparatus (3a), and the first server apparatus (3a) restores the second directory image to the first storage apparatus (10a),
the first server apparatus (3a) restores an object directory image which includes the first directory image and the second directory image to the first storage, and
whenever a file system object is created or updated, the second file system (352) of the second server apparatus (3b) manages the created or updated file system object using a different version ID, and the first server apparatus (3a) utilizes the version ID in the process of restoring the object directory.

## Patentansprüche

1. Datenverarbeitungssystem (1), das Folgendes umfasst:
eine erste Server-Vorrichtung (3a), die ein erstes Dateisystem (312) enthält und konfiguriert ist, E/A-Anforderungen von einer Client-Vorrichtung (2) zu empfangen;
eine erste Speichervorrichtung (10a), die Speicher der ersten Server-Vorrichtung (3a) enthält;
eine zweite Server-Vorrichtung (3b), die ein zweites Dateisystem (352) enthält und mit der ersten Server-Vorrichtung (3a) kommunikationstechnisch verbunden ist; und
eine zweite Speichervorrichtung (10b), die Speicher der zweiten Server-Vorrichtung (3b) enthält;
wobei die erste Server-Vorrichtung (3a) konfiguriert ist, Daten einer Datei, die das Ziel der E/A-Anforderung ist und die in der ersten Speichervorrichtung (10a) gespeichert ist, an die zweite Server-Vorrichtung (3b) zu übertragen, und
die zweite Server-Vorrichtung (3b) konfiguriert ist, die Daten, die von der ersten Server-Vorrichtung (3a) gesendet werden, in der zweiten Speichervorrichtung (10b) zu speichern, während ein Verzeichnisbild des ersten Dateisystems (312) in dem zweiten Dateisystem (352) gehalten wird,
wobei
die zweite Server-Vorrichtung (3b) konfiguriert ist, ein erstes Verzeichnisbild einer vorgegebenen Ebene in dem Verzeichnisbild, das in dem Dateisystem der ersten Server-Vorrichtung (3a) konfiguriert ist, aus dem Verzeichnisbild in der zweiten Speichervorrichtung (10b) zu erfassen und das erste Verzeichnisbild an die erste Server-Vorrichtung (3a) zu übertragen,
die erste Server-Vorrichtung (3a) konfiguriert ist, bei Empfang einer E/A-Anforderung für eine Datei, die von der Client-Vorrichtung (2) wiederhergestellt werden soll, nachdem das erste Verzeichnisbild, das von der zweiten Server-Vorrichtung (3b) gesendet wird, in der ersten Speichervorrichtung (10a) wiederhergestellt worden ist, zu bestimmen, ob ein zweites Verzeichnisbild, das erforderlich ist, um die empfangene E/A-Anforderung zu verarbeiten, in dem ersten Verzeichnisbild der ersten Speichervorrichtung (10a) vorhanden ist, und, falls das zweite Verzeichnisbild nicht vorhanden ist, eine Anforderung an die zweite Server-Vorrichtung (3b) auszugeben, um das zweite Verzeichnisbild anzufordern,
die zweite Server-Vorrichtung (3b) konfiguriert ist, dann, wenn die Anforderung von der ersten Server-Vorrichtung (3a) gesendet wird, das zweite Verzeichnisbild aus der zweiten Speichervorrichtung (10b) zu lesen und das zweite Verzeichnisbild an die erste Server-Vorrichtung (3a) zu übertragen, und die erste Server-Vorrichtung (3a) konfiguriert ist, das zweite Verzeichnisbild in der ersten Speichervorrichtung (10a) wiederherzustellen,
die erste Server-Vorrichtung (3a) konfiguriert ist, ein Objektverzeichnisbild, das das erste Verzeichnisbild und das zweite Verzeichnisbild enthält, in der ersten Speichervorrichtung (10a) wiederherzustellen, und
das zweite Dateisystem (352) der zweiten Server-Vorrichtung (3b) konfiguriert ist, immer dann, wenn ein Dateisystemobjekt erzeugt oder aktualisiert wird, das erzeugte oder aktualisierte Dateisystemobjekt unter Verwendung einer anderen Versions-ID zu managen, und die erste Server-Vorrichtung (3a) konfiguriert ist, die Versions-ID bei der Verarbeitung der Wiederherstellung des Objektverzeichnisses zu verwenden.

2. Datenverarbeitungssystem (1) nach Anspruch 1,
wobei das erste Dateisystem (312) der ersten Server-Vorrichtung (3a) konfiguriert ist, eine Anforderung an die zweite Server-Vorrichtung (3b) auszugeben, um Metadaten von Verzeichnissen anzufordern, die in einem Wurzelverzeichnis vorhanden sind, das zu einer früheren Zeit wiederhergestellt wurde, sowie Metadaten von Dateien anzufordern, die in dem Wurzelverzeichnis vorhanden sind,
wobei die zweite Server-Vorrichtung (3b) konfiguriert ist, bei Empfang der Anforderung die Metadaten von der zweiten Speichervorrichtung (10b) zu erfassen und die Metadaten an ein Wiederherstellungs-Zielverzeichnis, das in der ersten Server-Vorrichtung (3a) konfiguriert ist, zu übertragen, und
wobei die erste Server-Vorrichtung (3a) konfiguriert ist, ein Verzeichnisbild, das das Wurzelverzeichnis und die Dateisystemobjekte in dem Wurzelverzeichnis enthält, in Übereinstimmung mit den Metadaten des Wiederherstellungszielverzeichnisses zu konfigurieren und das Verzeichnisbild der ersten Speichervorrichtung (10a) als das erste Verzeichnisbild wiederherzustellen.

3. Datenverarbeitungssystem (1) nach Anspruch 2,
wobei die erste Server-Vorrichtung (3a) konfiguriert ist, die Metadaten der Datei, die in dem Objektverzeichnisbild vorhanden sind, aus der ersten Speichervorrichtung (10a) zu erfassen und eine Anforderung für Daten, die die Entität der Datei sind, an die zweite Server-Vorrichtung (3b) anhand der Metadaten auszugeben,
wobei die zweite Server-Vorrichtung (3b) konfiguriert ist, die Daten aus der zweiten Speichervorrichtung (10b) anhand der Anforderung zu erfassen und die Daten an die erste Server-Vorrichtung (3a) zu übertragen, und
wobei die erste Server-Vorrichtung (3a) konfiguriert ist, bei Erfassung der Daten die Daten in der Datei des Objektverzeichnisbildes der ersten Speichervorrichtung (10a) zu speichern.

4. Datenverarbeitungssystem (1) nach Anspruch 1, wobei das erste Dateisystem (312) einen Merker enthält, um das Schreiben in die Metadaten oder von Dateisystemobjekten, die zu dem ersten Dateisystem (312) gehören, zu beschränken, ohne die Sicht von Zugriffsrechten auf die Datensystemobjekte zu ändern, und
wobei die erste Server-Vorrichtung (3a) konfiguriert ist, den Merker für das Objektverzeichnisbild in einen Nurlesezustand für die Metadaten oder Daten zu konfigurieren.

5. Datenverarbeitungssystem (1) nach Anspruch 1,
wobei die erste Server-Vorrichtung (3a) konfiguriert ist, ein Wiederherstellungszielverzeichnis zu erzeugen, wo das erste Verzeichnisbild wiederhergestellt wird, ein Wiederherstellungsdatum und eine Wiederherstellungszeit, zu denen das erste Verzeichnisbild in dem Wiederherstellungszielverzeichnis wiederhergestellt wurde, in eine Verzeichnisbild-Managementtabelle (231) zusammen mit dem Wiederherstellungszielverzeichnis aufzuzeichnen und mehrere Aufzeichnungen des Wiederherstellungszielverzeichnisses und des Wiederherstellungsdatums und der Wiederherstellungszeit in die Verzeichnisbild-Managementtabelle (231) mit vorgegebener Zeiteinstellung auszuführen.

6. Datenverarbeitungssystem (1) nach Anspruch 1,
wobei das zweite Dateisystem (352) der zweiten Server-Vorrichtung (3b) konfiguriert ist, jedes Mal, wenn ein Dateisystemobjekt erzeugt oder aktualisiert wird, das erzeugte oder aktualisierte Dateisystemobjekt unter Verwendung der anderen Versions-ID und das Datum und die Zeit, zu denen die Erzeugung oder Aktualisierung ausgeführt wurde, zu managen.

7. Datenverarbeitungssystern (1) nach Anspruch 6,
wobei die erste Server-Vorrichtung (3a) konfiguriert ist, eine bestimmte Versions-ID unter den Versions-IDs der Dateisystemobjekte, die zu dem ersten Verzeichnisbild gehören, anhand der Versions-ID-Informationen und der Datums- und Zeitinformationen sowie des Wiederherstellungsdatums der wiederherzustellenden Datei zu bestimmen und die Erfassungsanforderung des Dateisystemobjekts, das durch die bestimmte Versions-ID spezifiziert wird, an die zweite Server-Vorrichtung (3b) zu übertragen, und
wobei die zweite Server-Vorrichtung (3b) konfiguriert ist, ein erstes Verzeichnisbild, das das Dateisystemobjekt der bestimmten Versions-ID enthält, von der zweiten Speichervorrichtung (10b) zu erfassen und das erste Verzeichnisbild an die erste Server-Vorrichtung (3a) zu übertragen, und die erste Server-Vorrichtung (3a) konfiguriert ist, das erste Verzeichnisbild in der ersten Speichervorrichtung (10a) wiederherzustellen.

8. Datenverarbeitungssystem (1) nach Anspruch 7,
wobei die erste Server-Vorrichtung (3a) konfiguriert ist, das Dateisystemobjekt, das durch die bestimmte Versions-ID spezifiziert wird, als das Dateisystemobjekt, das mittels des am nächsten bei dem Dateiwiederherstellungsdatum liegenden Datums gemanagt wird, zu konfigurieren.

9. Datenverarbeitungssystem (1) nach Anspruch 1,
wobei die erste Server-Vorrichtung (3a) konfiguriert ist, bei Empfang einer E/A-Anforderung für die von der Client-Vorrichtung (2) wiederherzustellende Datei zu prüfen, ob Metadaten der Datei in dem ersten Verzeichnisbild, das in dem Wiederherstellungszielverzeichnis von der Client-Vorrichtung (2) konfiguriert ist, vorhanden sind,
wobei die erste Server-Vorrichtung (3a) konfiguriert ist dann, wenn die Metadaten der Datei in dem ersten Verzeichnisbild nicht vorhanden sind, die Anforderung für die Metadaten des zweiten Verzeichnisbildes an die zweite Server-Vorrichtung (3b), die Erfassung von Metadaten von der zweiten Speichervorrichtung (10b) durch die zweite Server-Vorrichtung (3b) und die Übertragung der erfassten Metadaten an die erste Server-Vorrichtung (3a) so lange zu wiederholen, bis die Dateimetadaten als die Metadaten des zweiten Verzeichnisbildes in einer niedrigeren Ebene, die die Ebene genau in dem ersten Verzeichnisbild enthält, anhand der Pfadinformationen in der E/A-Anforderung erhalten werden, und
wobei die erste Server-Vorrichtung (3a) konfiguriert ist, dann, wenn die Metadaten der Wiederherstellungszieldatei wiederhergestellt worden sind, ein bestimmtes Verzeichnisbild in Übereinstimmung mit den Metadaten zu konfigurieren und anschließend dieses Verzeichnisbild in der ersten Speichervorrichtung (10a) zu speichern.

10. Datenverarbeitungssystem (1) nach Anspruch 9,
wobei die erste Server-Vorrichtung (3a) konfiguriert ist, bei Empfang einer E/A-Anforderung für die Aktualisierung der Wiederherstellungszieldatei, die in dem bestimmten Verzeichnisbild von der Client-Vorrichtung (2) vorhanden ist, eine Anforderung für die Entität der Wiederherstellungszieldatei an die zweite Server-Vorrichtung (3b) auszugeben,
wobei die zweite Server-Vorrichtung (3b) konfiguriert ist, die Entität von der zweiten Speichervorrichtung (10b) anhand der Anforderung zu erfassen und die Entität an die erste Server-Vorrichtung (3a) zu übertragen, und
wobei die erste Server-Vorrichtung (3a) konfiguriert ist, die Entität in der Wiederherstellungszieldatei des bestimmten Verzeichnisbildes zu speichern.

11. Datenverarbeitungssystem (1) nach Anspruch 10,
wobei die erste Server-Vorrichtung (3a) konfiguriert ist, bei Ausgabe einer Anforderung für die Entitäten der Dateien an die zweite Server-Vorrichtung (3b) eine Anforderung für einige der Entitäten statt für alle Entitäten der Datei an die zweite Server-Vorrichtung (3b) auszugeben.

12. Datenverarbeitungssystem (1) nach Anspruch 6,
wobei die erste Server-Vorrichtung (3a) konfiguriert ist, ein Wiederherstellungszielverzeichnis, wo das erste Verzeichnisbild wiederhergestellt wird, zu erzeugen und ein Wiederherstellungsdatum und eine Wiederherstellungszeit, zu denen das erste Verzeichnisbild in dem Wiederherstellungszielverzeichnis wiederhergestellt wurde, in eine Verzeichnisbild-Managementtabelle (231) zusammen mit dem Wiederherstellungszielverzeichnis aufzuzeichnen und mehrere Aufzeichnungen des Wiederherstellungszielverzeichnisses und des Wiederherstellungsdatums und der Wiederherstellungszeit in die Verzeichnisbild-Managementtabelle (231) mit einem vorgegebenen Zeitablauf auszuführen, und
wobei die erste Server-Vorrichtung (3a) konfiguriert ist, die Metadaten der Wiederherstellungszieldatei anhand des ersten Verzeichnisbildes, das in dem Wiederherstellungszielverzeichnis an einem vorgegebenen Wiederherstellungsdatum und einer vorgegebenen Wiederherstellungszeit, für die es eine Anforderung von der Client-Vorrichtung (2) unter mehrere Wiederherstellungsdaten und Wiederherstellungszeiten, die in der Verzeichnis-Managementtabelle (231) vorhanden sind, gab, wiederherzustellen.

13. Datenverarbeitungssystem (1) nach Anspruch 1,
wobei die erste Server-Vorrichtung (3a) konfiguriert ist, für das erste Verzeichnisbild, das in der ersten Speichervorrichtung (10a) gespeichert ist, die Tage und Stunden, die seit dem Wiederherstellungsdatum des ersten Verzeichnisbildes verstrichen sind, zu prüfen, und dann, wenn bestimmt wird, dass die verstrichenen Tage und Stunden vorgegebene Tage und Stunden überschreiten, das erste Verzeichnisbild aus der ersten Speichervorrichtung (10a) zu löschen.

14. Dateiwiederherstellungsverfahren eines Datenverarbeitungssystems (1), das eine erste Server-Vorrichtung (3a), die ein erstes Dateisystem (312) enthält und E/A-Anforderungen von einer Client-Vorrichtung (2) empfängt, eine erste Speichervorrichtung (10a), die Speicher der ersten Server-Vorrichtung (3a) enthält; eine zweite Server-Vorrichtung (3b), die ein zweites Dateisystem (352) enthält und mit der ersten Server-Vorrichtung (3a) kommunikationstechnisch verbunden ist; und eine zweite Speichervorrichtung (10b), die Speicher der zweiten Server-Vorrichtung (3b) enthält, umfasst, wobei die erste Server-Vorrichtung (3a) Daten einer Datei, die das Ziel der E/A-Anforderung ist und die in der ersten Speichervorrichtung (10a) gespeichert ist, an die zweite Server-Vorrichtung (3b) überträgt und die zweite Server-Vorrichtung (3b) die Daten, die von der ersten Server-Vorrichtung (3a) gesendet werden, in der zweiten Speichervorrichtung (10b) speichert, während ein Verzeichnisbild des ersten Dateisystems (312) in dem zweiten Dateisystem (352) gehalten wird,
wobei
die zweite Server-Vorrichtung (3b) ein erstes Verzeichnisbild einer vorgegebenen Ebene unter den Verzeichnisbildern, die in dem Dateisystem der ersten Server-Vorrichtung (3a) konfiguriert sind, aus dem Verzeichnisbild in der zweiten Speichervorrichtung (10b) erfasst und das erste Verzeichnisbild an die erste Server-Vorrichtung (3a) überträgt,
bei Empfang von der Client-Vorrichtung (2) einer E/A-Anforderung für eine Datei, die wiederhergestellt werden soll, nachdem das erste Verzeichnisbild, das von der zweiten Server-Vorrichtung (3b) gesendet wird, in der ersten Speichervorrichtung (10a) wiederhergestellt worden ist, die erste Server-Vorrichtung (3a) bestimmt, ob ein zweites Verzeichnisbild, das erforderlich ist, um die empfangene E/A-Anforderung zu verarbeiten, in dem ersten Verzeichnisbild der ersten Speichervorrichtung (10a) vorhanden ist, und dann, wenn das zweite Verzeichnisbild nicht vorhanden ist, eine Anforderung an die zweite Server-Vorrichtung (3b) ausgibt, um das zweite Verzeichnisbild anzufordern,
die zweite Server-Vorrichtung (3b) dann, wenn die Anforderung von der ersten Server-Vorrichtung (3a) gesendet wird, das zweite Verzeichnisbild aus der zweiten Speicher-Vorrichtung (10b) liest und das zweite Verzeichnisbild an die erste Server-Vorrichtung (3a) überträgt und die erste Server-Vorrichtung (3a) das zweite Verzeichnisbild in der ersten Speichervorrichtung (10a) wiederherstellt,
die erste Server-Vorrichtung (3a) ein Objektverzeichnisbild, das das erste Verzeichnisbild und das zweite Verzeichnisbild enthält, in dem ersten Speicher wiederherstellt und
dann, wenn ein Dateisystemobjekt erzeugt oder aktualisiert wird, das zweite Dateisystem (352) der zweiten Server-Vorrichtung (3b) das erzeugte oder aktualisierte Dateisystemobjekt unter Verwendung einer anderen Versions-ID managt und die erste Server-Vorrichtung (3a) die Versions-ID bei der Verarbeitung des Wiederherstellens des Objektverzeichnisses verwendet.

## Revendications

1. Système de traitement d'information (1), comprenant :
un premier appareil serveur (3 a) qui comprend un premier système de fichiers (312) et qui est configuré pour recevoir des requêtes E/S depuis un appareil client (2) ;
un premier appareil de stockage (10a) qui comprend le stockage du premier appareil serveur (3 a) ;
un second appareil serveur (3b) qui comprend un second système de fichiers (352) et qui est connecté de manière à communiquer avec le premier appareil serveur (3a) ; et
un second appareil de stockage (10b) qui comprend le stockage du second appareil serveur (3b) ;
dans lequel le premier appareil serveur (3a) est configuré pour transmettre des données d'un fichier qui est la cible de la requête E/S et qui est stocké dans le premier appareil de stockage (10a) vers le second appareil serveur (3b), et
le second appareil serveur (3b) est configuré pour stocker les données qui sont envoyées depuis le premier appareil serveur (3a) dans le second appareil de stockage (10b) tout en conservant une image du répertoire du premier système de fichiers (312) dans le second système de fichiers (352),
dans lequel
le second appareil serveur (3b) est configuré pour acquérir une première image de répertoire d'un niveau prédéterminé dans l'image de répertoire qui est configuré dans le système de fichiers du premier appareil serveur (3a) à partir de l'image de répertoire dans le second appareil de stockage (10b) et pour transmettre la première image de répertoire vers le premier appareil serveur (3a),
le premier appareil serveur (3a) est configuré, lors de la réception d'une requête E/S pour un fichier qui doit être restauré depuis l'appareil client (2) après que la première image de répertoire envoyée depuis le second appareil serveur (3b) a été restaurée vers le premier appareil de stockage (10a), pour déterminer si une seconde image de répertoire qui est requise pour traiter la requête E/S reçue existe ou non dans la première image de répertoire du premier appareil de stockage (10a) et, si la seconde image de répertoire n'existe pas, pour délivrer une requête au second appareil serveur (3b) pour requérir la seconde image de répertoire,
le second appareil serveur (3b) est configuré, quand la requête est envoyée depuis le premier appareil serveur (3a), pour lire la seconde image de répertoire depuis le second appareil de stockage (10b) et transmettre la seconde image de répertoire vers le premier appareil serveur (3 a), et le premier appareil serveur (3 a) est configuré pour restaurer la seconde image de répertoire vers le premier appareil de stockage (10a),
le premier appareil serveur (3a) est configuré pour restaurer une image de répertoire objet, qui inclut la première image de répertoire et la seconde image de répertoire, vers le premier appareil de stockage (10a), et
le second système de fichiers (352) du second appareil serveur (3b) est configuré, chaque fois qu'un objet du système de fichiers est créé ou mis à jour, pour gérer l'objet du système de fichier créé ou mis à jour en utilisant un identificateur de version différent, et le premier appareil serveur (3a) est configuré pour utiliser l'identificateur de version dans le processus de restauration du répertoire objet.

2. Système de traitement d'information (1) selon la revendication 1,
dans lequel le premier système de fichiers (312) du premier appareil serveur (3a) est configuré pour délivrer une requête au second appareil serveur (3b) pour requérir des métadonnées de répertoire qui existent dans un répertoire racine restauré à un temps antérieur, ainsi que des métadonnées de fichiers qui existent dans le répertoire racine,
dans lequel le second appareil serveur (3b) est configuré, lors de la réception de la requête, pour acquérir les métadonnées depuis le second appareil de stockage (10b) et transmettre les métadonnées au répertoire de destination de restauration configuré dans le premier appareil serveur (3a), et
dans lequel le premier appareil serveur (3 a) est configuré pour configurer une image de répertoire qui comprend le répertoire racine et des objets du système de fichiers dans le répertoire racine en accord avec les métadonnées du répertoire de destination de restauration, et pour restaurer l'image de répertoire vers le premier appareil de stockage (10a) à titre de première image de répertoire.

3. Système de traitement d'information (1) selon la revendication 2,
dans lequel le premier appareil serveur (3a) est configuré pour acquérir les métadonnées du fichier qui existe dans l'image du répertoire objet depuis le premier appareil de stockage (10a) est pour délivrer une requête pour des données qui concernent l'entité du fichier vers le second appareil serveur (3b) sur la base des métadonnées,
dans lequel le second appareil serveur (3b) est configuré pour acquérir les données depuis le second appareil de stockage (10b) sur la base de la requête et pour transmettre les données au premier appareil serveur (3 a), et
dans lequel le premier appareil serveur (3a) est configuré, lors de l'acquisition des données, pour stocker les données dans le fichier de l'image de répertoire objet du premier appareil de stockage (10a).

4. Système de traitement d'information (1) selon la revendication 1,
dans lequel le premier système de fichiers (312) comprend un drapeau pour restreindre, sans changer la vue des droits d'accès vers les objets du système de fichiers, l'écriture vers les métadonnées ou les données des objets du système de fichiers qui appartiennent au premier système de fichiers (312), et
dans lequel le premier appareil serveur (3a) est configuré pour configurer le drapeau pour l'image du répertoire objet dans un état en lecture seule pour les métadonnées ou les données.

5. Système de traitement d'information (1) selon la revendication 1,
dans lequel le premier appareil serveur (3a) est configuré pour créer un répertoire de destination de restauration dans lequel la première image de répertoire est restaurée, pour enregistrer la date et l'heure d'une restauration quand la première image de répertoire a été restaurée vers le répertoire de destination de restauration, dans une table de gestion d'images de répertoire (231), ensemble avec le répertoire de destination de restauration, et pour exécuter une pluralité d'enregistrements du répertoire de destination de restauration et de la date et l'heure de restauration vers la table de gestion d'images de répertoire (231) avec une temporisation prédéterminée.

6. Système de traitement d'information (1) selon la revendication 1,
dans lequel le second système de fichiers (352) du second appareil serveur (3b) est configuré, chaque fois qu'un objet du système de fichiers est créé ou mis à jour, pour gérer l'objet du système de fichiers créé ou mis à jour en utilisant l'identificateur de version différent et la date et l'heure à laquelle la création ou la mise à jour a été exécutée.

7. Système de traitement d'information (1) selon la revendication 6,
dans lequel le premier appareil serveur (3a) est configuré pour déterminer un identificateur de version spécifique parmi les identificateurs de version des objets du système de fichiers appartenant à la première image de répertoire sur la base de l'information d'identificateur de version et de l'information sur la date et l'heure, ainsi que la date de restauration du fichier à restaurer, et pour transmettre la requête d'acquisition de l'objet du système de fichiers spécifié par l'identificateur de version spécifique vers le second appareil serveur (3b), et
dans lequel le second appareil serveur (3b) est configuré pour acquérir une première image de répertoire incluant l'objet du système de fichiers de l'identificateur de version spécifique depuis le second appareil de stockage (10b) et pour transmettre la première image de répertoire au premier appareil serveur (3a), et le premier appareil serveur (3a) est configuré pour restaurer la première image de répertoire vers le second appareil de stockage (10a).

8. Système de traitement d'information (1) selon la revendication 7,
dans lequel le premier appareil serveur (3a) est configuré pour configurer l'objet du système de fichiers spécifié par l'identificateur de version spécifique à titre d'objet du système de fichiers géré au moyen de la date la plus proche de la date de restauration du fichier.

9. Système de traitement d'information (1) selon la revendication 1,
dans lequel le premier appareil serveur (3a) est configuré, lors de la réception d'une requête E/S pour le fichier à restaurer depuis l'appareil client (2), pour vérifier si des métadonnées du fichier existent dans la première image répertoire configurée dans le répertoire de destination de restauration depuis l'appareil client (2),
dans lequel le premier appareil serveur (3 a) est configuré, si les métadonnées du fichier n'existent pas dans la première image de répertoire, pour répéter la requête pour les métadonnées de la seconde image de répertoire vers le second appareil serveur (3b), l'acquisition de métadonnées depuis le second appareil de stockage (10b) par le second appareil serveur (3b), et la transmission des métadonnées acquises vers le premier appareil serveur (3a) jusqu'à ce que les métadonnées de fichiers soient obtenues à titre de métadonnées de la seconde image répertoire dans un niveau inférieur qui inclut le niveau qui se trouve juste dans la première image répertoire sur la base d'informations de trajet dans la requête E/S, et
dans lequel le premier appareil serveur (3a) est configuré, après que les métadonnées du fichier cible de restauration ont été restaurées, pour configurer une image de répertoire spécifique en accord avec les métadonnées et stocker ultérieurement cette image répertoire dans le premier appareil de stockage (10a).

10. Système de traitement d'information (1) selon la revendication 9,
dans lequel le premier appareil serveur (3 a) est configuré, lors de la réception d'une requête E/S pour mettre à jour le fichier cible de restauration qui existe dans l'image répertoire spécifique depuis l'appareil client (2), pour délivrer une requête concernant l'entité du fichier cible de restauration vers le second appareil serveur (3b),
dans lequel le second appareil serveur (3b) est configuré pour acquérir l'entité depuis le second appareil de stockage (10b) sur la base de la requête, et pour transmettre l'entité au premier appareil serveur (3 a), et dans lequel le premier appareil serveur (3a) est configuré pour stocker l'entité dans le fichier cible de restauration de l'image de répertoire spécifique.

11. Système de traitement d'information (1) selon la revendication 10,
dans lequel le premier appareil serveur (3 a) est configuré, lors de la délivrance une requête concernant les entités des fichiers vers le second appareil serveur (3b), pour délivrer une requête pour certaines des entités plutôt que pour toutes les entités des fichiers vers le second appareil serveur (3b).

12. Système de traitement d'information (1) selon la revendication 6,
dans lequel le premier appareil serveur (3a) est configuré pour créer un répertoire de destination de restauration dans lequel la première image de répertoire est restaurée, pour enregistrer une date et une heure de restauration quand la première image de répertoire a été restaurée dans le répertoire de destination de restauration, dans une table de gestion d'images de répertoire (231) ensemble avec le répertoire de destination de restauration, et pour exécuter une pluralité d'enregistrements du répertoire de destination de restauration et la date et l'heure de restauration vers la table de gestion d'images de répertoire (231), avec une temporisation prédéterminée, et
dans lequel le premier appareil serveur (3a) est configuré pour restaurer les métadonnées du fichier cible de restauration sur la base de la première image de répertoire stockée dans le répertoire de destination de restauration avec une date et une heure de restauration prédéterminées pour lesquelles il y a eu une requête depuis l'appareil client (2), parmi une pluralité de dates et d'heures de restauration qui existent dans la table de gestion de répertoires (231).

13. Système de traitement d'information (1) selon la revendication 1,
dans lequel le premier appareil serveur (3a) est configuré, pour la première image de répertoire stockée dans le premier appareil de stockage (10a), pour vérifier le nombre de jours et d'heures qui se sont écoulées depuis la date de restauration de la première image de répertoire et, lorsqu'il détermine que le nombre de jours et d'heures écoulées dépasse un nombre de jours et d'heures prédéterminé, pour effacer l'image de répertoire depuis le premier appareil de stockage (10a).

14. Procédé de restauration de fichiers d'un système de traitement d'information (1) qui comprend un premier appareil serveur (3a) qui comprend un premier système de fichiers (312) et qui reçoit des requêtes E/S depuis un appareil client (2), un premier appareil de stockage (10a) qui comprend le stockage du premier appareil serveur (3a) ; un second appareil serveur (3) qui comprend un second système de fichiers (352) et qui est connecté de manière à communiquer avec le premier appareil serveur (3a) ; et un second appareil de stockage (10b) qui comprend le stockage du second appareil serveur (3b), le premier appareil serveur (3a) transmettant les données d'un fichier qui est la cible de la requête E/S et qui est stocké dans le premier appareil de stockage (10a) vers le second appareil serveur (3b), et le second appareil serveur (3b) stockant les données qui sont envoyées depuis le premier appareil serveur (3b) stockant les données qui sont envoyées depuis le premier appareil serveur (3a) dans le second appareil de stockage (10b) tout en conservant une image du répertoire du premier système de fichiers (312) dans le second système de fichiers (352),
dans lequel
le second appareil serveur (3b) acquiert une première image de répertoire d'un niveau prédéterminé parmi les images de répertoires configurées dans le système de fichiers du premier appareil serveur (3a) depuis l'image de répertoire dans le second appareil de stockage (10b) et transmet la première image de répertoire au premier appareil serveur (3 a),
lors de la réception, depuis l'appareil client (2), d'une requête E/S pour un fichier à restaurer après que la première image de répertoire envoyée depuis le second appareil serveur (3b) a été restaurée vers le premier appareil de stockage (10a), le premier appareil serveur (3a) détermine si une seconde image répertoire qui est requise afin de traiter la requête E/S reçue existe ou non dans la première image de répertoire du premier appareil de stockage (10a), et si la seconde image répertoire n'existe pas, il délivre une requête au second appareil serveur (3b) pour requérir la seconde image de répertoire,
quand la requête est envoyée depuis le premier appareil serveur (3a), le second appareil serveur (3b) lit la seconde image de répertoire depuis le second appareil de stockage (10b) et transmet la seconde image de répertoire au premier appareil serveur (3a), et le premier appareil serveur (3a) restaure la seconde image de répertoire vers le premier appareil de stockage (10a),
le premier appareil serveur (3a) restaure une image de répertoire objet qui inclut la première image de répertoire et la seconde image de répertoire vers le premier stockage, et
chaque fois qu'un objet du système de fichiers est créé ou mis à jour, le second système de fichiers (352) du second appareil serveur (3b) gère l'objet du système de fichiers créé ou mis à jour en utilisant un identificateur de version différent, et le premier appareil serveur (3a) utilise identificateur de version dans le processus de restauration du répertoire objet.
